# EUROPÄISCHE PATENTSCHRIFT

(11) **EP 3 265 348 B1**
(45) Veröffentlichungstag und Bekanntmachung des Hinweises auf die Patenterteilung: **08.05.2019**
(21) Anmeldenummer: 16707111.7
(22) Anmeldetag: 01.03.2016
(51) Int. Cl.: B60T 8/40

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 05.03.2015 DE 102015203924; 09.03.2015 DE 102015204156; 26.02.2016 DE 102016203111
(43) Veröffentlichungstag der Anmeldung: 10.01.2018
(73) Patentinhaber: Continental Teves AG & Co. OHG, 60488 Frankfurt am Main (DE)
(72) Erfinder: DRUMM, Stefan, 55291 Saulheim (DE); LINHOFF, Paul, 61267 Neu-Anspach (DE); BESIER, Marco, 65307 Bad Schwalbach (DE)
(86) Internationale Anmeldenummer: PCT/EP2016/054268
(87) Internationale Veröffentlichungsnummer: WO 2016/139186

(56) Entgegenhaltungen:
- WO-A1-93/07032
- WO-A1-2012/150120
- WO-A1-2014/184840
- DE-A1-102013 214 004

## Beschreibung

Die Erfindung betrifft eine Bremsanlage für Kraftfahrzeuge gemäß dem Oberbegriff des Anspruchs 1.

Bei Kraftfahrzeugen sind hydraulische Bremssysteme weit verbreitet. Vermehrt kommen Bremssysteme zum Einsatz, in welchen Bremsungen durchführbar sind, die unabhängig von einem Fahrerbremswunsch durch Assistenzsysteme mit Hilfe elektrischer bzw. elektronischer Mittel ausgeführt werden. Derartige, durch elektronische Steuergeräte kontrollierte Bremsungen werden beispielsweise zur Realisierung von automatischen Abstandsregelfunktionen oder (Not) Bremsassistenzfunktionen benötigt. Es sind weiter "Brake-by-wire"-Bremssysteme bekannt, die auch bei einer Normalbremsbetätigung durch den Fahrer die Bremsbetätigung elektronisch erfassen und die entsprechende Bremsung elektronisch kontrolliert umsetzen, ohne dass der Fahrer dabei einen direkten mechanischen oder hydraulischen Zugriff auf die Radbremsen erhält. In derartigen Systemen ist die Verfügbarkeit der Bremsanlage hinsichtlich sowohl der Normalbremsfunktion als auch der radindividuellen Bremsdruckregelfunktionen für die Sicherheit von großer Bedeutung.

Es ist zu erwarten, dass zukünftig auch Kraftfahrzeugbremssysteme zum Einsatz kommen werden, welche für automatisiert fahrende Kraftfahrzeuge geeignet sind. Diese Bremssysteme müssen grundsätzlich elektronisch ansteuerbare Systeme oder "Brake-by-wire"-Systeme sein. Dies bedeutet, dass eine Bremsanforderung von einem als virtueller Fahrer agierenden Computersystem über elektronische oder elektrische Steuersignale angefordert und vom Bremssystem ohne Zutun des Fahrers umgesetzt werden kann. Besonders in solchen System-Verbünden muss aus Sicherheitsgründen eine ausreichend hohe Verfügbarkeit der Normalbremsfunktion und auch der fremdansteuerbaren Bremsfunktion mit radindividueller Regelung gewährleistet sein.

In der WO 2012/150120 A1 wird eine Bremsanlage für Kraftfahrzeuge beschrieben, welche vier hydraulisch betätigbare Radbremsen, einen unter Atmosphärendruck stehen Druckmittelvorratsbehälter und eine erste elektrohydraulische Bremsensteuervorrichtung umfasst, welche einen Hauptbremszylinder, eine elektrisch ansteuerbare Druckbereitstellungseinrichtung, eine Druckregelventilanordnung zum Einstellen radindividueller Bremsdrücke und für jede Radbremse einen radindividuellen Ausgangsdruckanschluss umfasst. Weiter umfasst die Bremsanlage ein zweites elektrohydraulisches Modul mit elektrisch ansteuerbaren Pumpen und elektrisch betätigbaren Ventilen, welches hydraulisch vor der Druckregelventilanordnung der ersten Bremsensteuervorrichtung angeordnet ist, wobei die Saugseiten zweier Pumpen des zweiten elektrohydraulischen Moduls direkt mit dem Druckmittelvorratsbehälter verbunden sind. Nachteilig ist dabei, dass neben der ersten Bremsensteuervorrichtung auch das zweite Modul an den Druckmittelvorratsbehälter angeschlossen werden muss und dass das zweite Modul mit weiteren vier hydraulischen Verbindungen mit dem ersten Modul verbunden werden muss, was selbst bei einem zur ersten Bremsensteuervorrichtung benachbart angeordeneten zweiten Modul einen erheblichen Aufwand verursacht und gegebenenfalls bei zur ersten Bremsensteuervorrichtung beabstandet angeordnetem zweitem Modul zu mehreren langen Verbindungsleitungen führt. Außerdem muss zum hydraulikanschlusstechnischen Einfügen des zweiten Moduls in die erste Bremsensteuervorrichtung vor der Druckregelventilanordnung bzw. vor den Trennventilen der ersten Bremsensteuervorrichtung zusätzliche Anschlüsse für das zweite Modul vorgesehen werden. Dieses Hinzufügen einer Vielzahl von hydraulischen Anschlüssen bedeutet einen solchermaßen komplexen Eingriff in die Hydraulikkomponenten-Anordnung der ersten Bremsensteuervorrichtung, dass es nicht möglich ist, diese mechanisch entsprechend umzuarbeiten. Vielmehr muss eine weitere, für den Anschluss des zweiten Moduls vorbereitete, konstruktiv abweichende Variante produziert werden.

Es ist eine Aufgabe der vorliegenden Erfindung, eine Bremsanlage für Kraftfahrzeuge bereitzustellen, welche für Fahrzeuge mit Autopilot-Fahrfunktion (z.B. für hochautomatisiert oder autonom fahrende Kraftfahrzeuge) geeignet ist. Weiterhin soll die Zahl von hydraulischen Verbindungsleitungen und/oder die Zahl von hydraulischen Anschlüssen an der erste elektrohydraulische Bremsensteuervorrichtung reduziert werden, und so der Aufbau der Bremsanlage vereinfacht werden.

Diese Aufgabe wird erfindungsgemäß durch eine Bremsanlage gemäß Anspruch 1 gelöst.

Der Erfindung liegt der Gedanke zugrunde in einer Bremsanlage für Kraftfahrzeuge mit hydraulisch betätigbaren Radbremsen einer ersten elektrohydraulischen Bremsensteuervorrichtung, mit u.a. einem zugeordneten Druckmittelvorratsbehälter und radindividuellen Auslassventilen und Ausgangsdruckanschlüssen, wobei die Ausgangsdruckanschlüsse über die Auslassventile mit dem Druckmittelvorratsbehälter verbunden sind, eine zweite elektrohydraulische Bremsensteuervorrichtung hydraulisch nachzuschalten, welche eine zweite elektrisch ansteuerbare Druckbereitstellungseinrichtung mit zumindest einer ersten Pumpe mit einer Saugseite und einer Druckseite zur Versorgung zumindest einer ersten Radbremse der hydraulisch betätigbaren Radbremsen umfasst. Dabei ist die Saugseite der ersten Pumpe der zweiten elektrohydraulischen Bremsensteuervorrichtung mit einem ersten Ausgangsdruckanschluss der Ausgangsdruckanschlüsse der ersten elektrohydraulischen Bremsensteuervorrichtung verbunden, wobei dem, dem ersten Ausgangsdruckanschluss zugeordneten Auslassventil ein in Richtung des ersten Ausgangsdruckanschlusses öffnendes Rückschlagventil parallel geschaltet ist.

Die Erfindung bietet den Vorteil, dass die zweite Bremsensteuervorrichtung optional zu der ersten Bremsensteuervorrichtung ergänzt werden kann, um ein hochautomatisiertes Fahren oder autonomes Fahren (Autopilot-Fahrfunktion) zu ermöglichen. Somit können Fahrzeuge aus Baureihen, die teils mit und teils ohne Autopilot-Fahrfunktion ausgerüstet sind, stets mit der gleichen ersten Bremsensteuervorrichtung bestückt werden, wobei in autopilotierbare Fahrzeuge einfach zusätzlich die zweite Bremsensteuervorrichtung eingebaut wird. Die zweite Bremsensteuervorrichtung kann einfach an den entsprechenden (ersten) Ausgangsdruckanschluss oder die entsprechenden Ausgangsdruckanschlüsse angeschlossen werden. Die betroffenen Radbremsen werden dann an die zweite Bremsensteuervorrichtung angeschlossen. Mit anderen Worten ausgedrückt, wird die zweite Bremsensteuervorrichtung zwischen erster Bremsensteuervorrichtung und Radbremsen eingefügt. Dabei werden an der ersten Bremssteuervorrichtung keine zusätzlichen hydraulischen Anschlüsse benötigt.

Die Erfindung bietet weiterhin den Vorteil, dass für den (ersten) bzw. die Ansaugpfad(e) der zweiten elektrisch ansteuerbaren Druckbereitstellungseinrichtung beim Ansaugen von Druckmittel mittels der zweiten Bremsensteuervorrichtung aufgrund des parallel geschalteten Rückschlagventils ein relativ ungehinderter Ansaugvolumenstrom vom Druckmittelvorratsbehälter der ersten Bremsensteuervorrichtung hin zu der zweiten Druckbereitstellungseinrichtung der zweiten Bremsensteuervorrichtung ermöglicht wird, der durch kein zu durchströmendes (Elektromagnet)Ventil gedrosselt wird.

Die hydraulisch betätigbaren Radbremsen sind zumindest hydraulisch betätigbar, d.h. einzelne oder alle Radbremsen können zusätzlich elektrisch betätigbar, z.B. elektromechanisch betätigbar, ausgeführt sein.

Die erste elektrohydraulische Bremsensteuervorrichtung bzw. deren erste elektrisch ansteuerbare Druckbereitstellungseinrichtung ist zur Versorgung jeder der hydraulisch betätigbaren Radbremsen ausgebildet.

Die zweite elektrohydraulische Bremsensteuervorrichtung bzw. die zweite elektrisch ansteuerbare Druckbereitstellungseinrichtung ist zur Versorgung zumindest der ersten Radbremse ausgebildet.

Jeder der Ausgangsdruckanschlüsse der ersten elektrohydraulischen Bremsensteuervorrichtung ist durch ein elektrisches Aktivieren des zugehörigen Auslassventils im Sinne eines Zulassens des Abströmens von Druckmittel zum Druckmittelvorratsbehälter mit dem Druckmittelvorratsbehälter verbindbar.

Die Saugseite der ersten Pumpe ist mit dem ersten Ausgangsdruckanschluss der Ausgangsdruckanschlüsse der ersten elektrohydraulischen Bremsensteuervorrichtung direkt, z.B. ohne ein zwischengeschaltetes Ventil, oder trennbar, z.B. über ein Ventil, verbunden.

Die Druckseite der ersten Pumpe ist zur Versorgung der ersten Radbremse zumindest mit der ersten Radbremse verbunden.

Die zweite Bremsensteuervorrichtung umfasst zumindest die erste Pumpe. Dabei ist für die, insbesondere für jede, Pumpe ein, insbesondere genau ein, Rückschlagventil vorgesehen, welches parallel zu einem Auslassventil der ersten Bremsensteuervorrichtung angeordnet ist und welches eine Saugseite der Pumpe mit dem Druckmittelvorratsbehälter verbindet. Dabei ist das Rückschlagventil in Richtung des zugeordneten Ausgangsdruckanschlusses bzw. in Richtung der zweiten Bremsensteuervorrichtung öffnend ausgeführt.

Die erste Bremsensteuervorrichtung und/oder die zweite Bremsensteuervorrichtung ist/sind bevorzugt derart ausgebildet, dass die zweite Bremsensteuervorrichtung ausschließlich durch die erste Bremsensteuervorrichtung, d.h. insbesondere durch zumindest einen der Ausgangsdruckanschlüsse, hindurch Druckmittel aus dem Druckmittelvorratsbehälter ansaugen kann.

Bevorzugt ist demjenigen, insbesondere jedem, Auslassventil der ersten Bremsensteuervorrichtung ein in Richtung des zugeordneten Ausgangsdruckanschlusses öffnendes Rückschlagventil parallel geschaltet ist, durch dessen zugeordneten Ausgangsdruckanschluss hindurch Druckmittel ansaugbar ist oder angesaugt werden soll und/oder für dessen Radbremse die zweite Bremsensteuervorrichtung eine Pumpe umfasst.

Gemäß einer bevorzugten Weiterbildung der Erfindung umfasst die zweite Druckbereitstellungseinrichtung weiterhin eine zweite Pumpe mit einer Saugseite und einer Druckseite zur Versorgung zumindest einer zweiten Radbremse der hydraulisch betätigbaren Radbremsen, wobei die Saugseite der zweiten Pumpe mit einem zweiten Ausgangsdruckanschluss der Ausgangsdruckanschlüsse der ersten elektrohydraulischen Bremsensteuervorrichtung verbunden ist (z.B. direkt oder durch ein Ventil trennbar) . Dabei ist dem, dem zweiten Ausgangsdruckanschluss zugeordneten Auslassventil ein in Richtung des zweiten Ausgangsdruckanschlusses öffnendes Rückschlagventil parallel geschaltet. So kann die zweite Druckbereitstellungseinrichtung zumindest zwei Radbremsen mit Druck versorgen und umfasst zumindest zwei Saugpfade, über die relativ ungehindert Druckmittel vom Druckmittelvorratsbehälter angesaugt werden kann.

Bevorzugt sind die erste und die zweite Radbremse einer Vorderachse des Kraftfahrzeugs zugeordnet. So kann bei Ausfall der ersten Druckbereitstellungseinrichtung mittels der zweiten Druckbereitstellungseinrichtung zumindest für die Vorderräder, welche während einer Bremsung im Allgemeinen höhere Bremskräfte als die Hinterräder absetzen können, ausreichend Bremsdruck aufgebaut werden.

Bevorzugt ist die zweite elektrohydraulische Bremsensteuervorrichtung dazu ausgebildet, die Bremsdrücke der Radbremsen der Vorderachse auf Basis der Raddrehzahlinformation aller Räder des Kraftfahrzeugs, einer Eingangsdruckinformation der zweiten elektrohydraulischen Bremsensteuervorrichtung und eines elektronischen Bremswunschs zu regeln. Besonders bevorzugt wird die Eingangsdruckinformation über einen Drucksensor der zweiten Bremsensteuervorrichtung erfasst. Die Eingangsdruckinformation repräsentiert vorteilhafterweise einen Fahrerbremswunsch. Der elektronische Bremswunsch wird besonders bevorzugt von einer Autopilotfunktion bereitgestellt. Der elektronische Bremswunsch wird vorteilhafterweise der zweiten elektronischen Steuer- und Regeleinheit über eine Kommunikationsverbindung zugeführt bzw. bereitgestellt.

Bevorzugt sind die Räder der Hinterachse zusätzlich zur hydraulischen Radbremse mit elektrisch oder elektromechanisch betätigbaren Radbremsen ausgeführt, wobei die zweite elektrohydraulische Bremsensteuervorrichtung zur elektrischen Betätigung der elektrischen oder elektromechanischen Radbremsen ausgebildet ist. Besonders bevorzugt sind die Räder der Hinterachse mit elektrischen Parkbremsen ausgeführt. Alternativ sind die Räder der Hinterachse mit Kombibremsen, die sowohl hydraulisch als auch elektrisch ansteuerbar sind, ausgeführt.

Gemäß einer ersten bevorzugten Ausführungsform der erfindungsgemäßen Bremsanlage umfasst die zweite elektrohydraulische Bremsensteuervorrichtung keine Pumpe für eine dritte Radbremse und eine vierte Radbremse der hydraulisch betätigbaren Radbremsen, wobei die dritte und die vierte Radbremse einer Hinterachse des Kraftfahrzeugs zugeordnet sind. Hierdurch kann die zweite Bremsensteuervorrichtung kostengünstiger hergestellt werden. Die dritte und vierte Radbremse sind dann vorteilhafterweise jeweils direkt, insbesondere ohne Zwischenschaltung eines Ventils, mit dem zugehörigen Ausgangsdruckanschluss der ersten Bremsensteuervorrichtung hydraulisch verbunden. Dabei kann die hydraulische Verbindung zwischen Radbremse und Ausgangsdruckanschluss durch die zweite Bremsensteuervorrichtung verlaufen (d.h. die zweite Bremsensteuervorrichtung ist für alle Ausgangsdruckanschlüsse der ersten Bremsensteuervorrichtung nachgeschaltet) oder die hydraulisch Verbindung zwischen Radbremse und Ausgangsdruckanschluss kann außerhalb der zweiten Bremsensteuervorrichtung verlaufen (d.h. die zweite Bremsensteuervorrichtung ist für ersten und zweiten Ausgangsdruckanschluss der ersten Bremsensteuervorrichtung nachgeschaltet).

Bevorzugt sind die dritte und die vierte Radbremse zusätzlich elektrisch oder elektromechanisch betätigbar ausgeführt, vorteilhafterweise mit einer elektrischen Parkbremse. Dabei ist die zweite elektrohydraulische Bremsensteuervorrichtung zur elektrischen Betätigung der dritten und vierten Radbremse ausgebildet. Dies bietet den Vorteil, dass die zweite Bremsensteuervorrichtung die erste und zweite Radbremse hydraulisch sowie die dritte und vierte Radbremse elektrisch / elektromechanisch betätigen kann, so dass an vier Radbremsen eine Bremskraft aufbaubar ist, auch wenn die erste Bremsensteuervorrichtung ausgefallen ist.

Bevorzugt umfasst die zweite elektrohydraulische Bremsensteuervorrichtung für die erste und die zweite Pumpe jeweils einen Niederdruckspeicher, wobei die Saugseite der Pumpe über ein in Richtung der Saugseite öffnendes Rückschlagventil mit dem Niederdruckspeicher verbunden ist. Die Pumpe kann so auch Druckmittel aus dem Niederdruckspeicher ansaugen.

Die zweite elektrohydraulische Bremsensteuervorrichtung umfasst bevorzugt weiterhin für die erste und die zweite Pumpe jeweils ein stromlos geschlossen ausgeführtes Ablassventil, wobei die der Pumpe zugeordnete Radbremse über das Ablassventil mit dem Niederdruckspeicher verbindbar ist. Aus der Radbremse abzulassendes Druckmittelvolumen kann so durch den Niederdruckspeicher aufgenommen werden.

Gemäß einer Weiterbildung der Erfindung umfasst die zweite elektrohydraulische Bremsensteuervorrichtung für die erste und die zweite Pumpe jeweils ein stromlos geschlossen ausgeführtes Verbindungsventil, über welches die Saugseite der Pumpe mit dem zugeordneten Ausgangsdruckanschluss der ersten Bremsensteuervorrichtung verbindbar ist.

Gemäß einer zweiten bevorzugten Ausführungsform der erfindungsgemäßen Bremsanlage umfasst die zweite Druckbereitstellungseinrichtung eine dritte Pumpe mit einer Saugseite und einer Druckseite zur Versorgung einer dritten Radbremse der hydraulisch betätigbaren Radbremsen und eine vierte Pumpe mit einer Saugseite und einer Druckseite zur Versorgung einer vierten Radbremse der hydraulisch betätigbaren Radbremsen, wobei die Saugseite der dritten Pumpe mit einem dritten Ausgangsdruckanschluss der Ausgangsdruckanschlüsse der ersten elektrohydraulischen Bremsensteuervorrichtung und die Saugseite der vierten Pumpe mit einem vierten Ausgangsdruckanschluss der Ausgangsdruckanschlüsse der ersten elektrohydraulischen Bremsensteuervorrichtung verbunden ist, wobei dem dem dritten Ausgangsdruckanschluss zugeordneten Auslassventil und dem dem vierten Ausgangsdruckanschluss zugeordneten Auslassventil je ein in Richtung des entsprechenden Ausgangsdruckanschlusses öffnendes Rückschlagventil parallel geschaltet ist. So kann die zweite Druckbereitstellungseinrichtung vier Radbremsen mit Druck versorgen und umfasst vier Saugpfade, über die relativ ungehindert Druckmittel vom Druckmittelvorratsbehälter angesaugt werden kann.

Gemäß einer dritten bevorzugten Ausführungsform der erfindungsgemäßen Bremsanlage ist die Druckseite der ersten Pumpe mit der erster Radbremse und einer dritten Radbremse der hydraulisch betätigbaren Radbremsen und die Druckseite der zweiten Pumpe mit der zweiten Radbremse und einer vierten Radbremse der hydraulisch betätigbaren Radbremsen verbunden. So können bei Verwendung von nur zwei Pumpen dennoch vier Radbremsen durch die zweite Bremsensteuervorrichtung hydraulisch betätigt werden.

Bevorzugt ist für die erste und die zweite Radbremse jeweils ein stromlos offen, analog ansteuerbar ausgeführtes Ventil zwischen jeweiliger Pumpendruckseite und Radbremse angeordnet und für die dritte und die vierte Radbremse ist jeweils ein stromlos geschlossen ausgeführtes Ventil zwischen jeweiliger Pumpendruckseite und Radbremse angeordnet. Bevorzugt sind die erste und die zweite Radbremse einer Hinterachse und die dritte und die vierte Radbremse einer Vorderachse des Kraftfahrzeugs zugeordnet sind. Der Vorteil einer solchen Anordnung besteht darin, dass mit nur zwei Pumpen vier Radbremsen mit individuell über die Ventile einstellbaren, hydraulischen Drücken versorgt werden können.

Für das parallel geschaltete Rückschlagventil oder für jedes der parallel geschalteten Rückschlagventile ist das Rückschlagventil bevorzugt in den Ventileinsatz des entsprechenden Auslassventils integriert. Dies hat den Vorteil, dass im Ventilblock der ersten Bremsensteuervorrichtung keine Bohrungen oder Kanäle für die Rückschlagventile angelegt werden müssen.

Zur Trennung von Bremskreisen sind gemäß einer Weiterbildung der Erfindung die Auslassventile der ersten elektrohydraulischen Bremsensteuervorrichtung über zumindest zwei, vorteilhafterweise voneinander unabhängige, Rücklaufleitungen mit Kammern des Druckmittelvorratsbehälters verbunden.

Bevorzugt ist eine der Rücklaufleitungen je mit zwei der Auslassventile verbunden, wobei die zu den zwei Auslassventilen gehörenden hydraulisch betätigbaren Radbremsen an denselben Druckraum eines Tandemhauptbremszylinders der ersten elektrohydraulischen Bremsensteuervorrichtung angeschlossen sind. Dies hat den Vorteil, dass beim Betrieb der zweiten Bremsensteuervorrichtung eine Leckage in einem an einen der Druckräume des Tandemhauptbremszylinder angeschlossenen Bremskreises nicht automatisch zu einem Verlust von Druckmittel im anderen Bremskreis des Tandemhauptbremszylinders führt.

Bevorzugt ist die zweite elektrohydraulische Bremsensteuervorrichtung als eine bauliche Einheit in Form eines Bremsensteuergeräts mit einer elektronischen Steuer- und Regeleinheit und einer hydraulischen Steuer- und Regeleinheit ausgeführt. Dabei ist die elektronische Steuer- und Regeleinheit zur Ansteuerung der zweiten Druckbereitstellungseinrichtung ausgebildet. So kann die zweite Bremsensteuervorrichtung einfach optional zu einer ersten Bremsensteuervorrichtung hinzugefügt werden (Baukastenprinzip).

Anders ausgedrückt, die zweite elektrohydraulische Bremsensteuervorrichtung ist bevorzugt für zumindest eine Gruppe der hydraulisch betätigbaren Radbremsen (zumindest die erste Radbremse) in Reihe zwischen die zugehörigen Ausgangsdruckanschlüsse der ersten Bremsensteuervorrichtung und die Radbremse(n) der Gruppe von Radbremsen geschaltet. Für die Auslassventile derjenigen Radbremsen, welche der Gruppe von Radbremsen angehören und für welche eine Pumpe in der zweiten Bremsensteuervorrichtung vorgesehen sind, ist jeweils ein dem Auslassventil parallel geschaltetes, in Richtung der Ausgangsdruckanschlusses öffnendes Rückschlagventil vorgesehen. Die Gruppe von Radbremsen kann eine oder mehrere oder alle der hydraulisch betätigbaren Radbremsen umfassen. Bevorzugt umfasst die Gruppe zwei oder vier Radbremsen. Im Falle von zwei Radbremsen sind dies vorteilhafterweise die Radbremsen einer Vorderachse des Kraftfahrzeugs.

Die zweite Bremsensteuervorrichtung umfasst zumindest eine Pumpe, wobei für jede Pumpe der zweiten Bremsensteuervorrichtung, insbesondere in der ersten Bremsensteuervorrichtung, ein, insbesondere genau ein, Rückschlagventil vorgesehen ist, welches parallel zu einem Auslassventil der ersten Bremsensteuervorrichtung angeordnet ist.

Die zweite Druckbereitstellungseinrichtung umfasst bevorzugt für jede Radbremse der Gruppe von Radbremsen eine Pumpe, deren Saugseite mit einem Ausgangsdruckanschluss der ersten Bremsensteuervorrichtung, insbesondere direkt oder über ein Ventil, verbunden ist.

Bevorzugt sind die Radbremsen, welche nicht der Gruppe von Radbremsen angehören, die mittels der zweiten Bremsensteuervorrichtung mit hydraulischem Druck beaufschlagbar sind, oder für welche die zweite Bremsensteuervorrichtung keine Pumpe umfasst, sowohl hydraulisch betätigbar als auch elektrisch oder elektromechanisch betätigbar ausgeführt.

Die zweite elektrohydraulische Bremsensteuervorrichtung ist bevorzugt zur elektrischen Betätigung der elektrisch oder elektromechanisch betätigbaren Radbremsen ausgebildet. Besonderes bevorzugt sind die Radbremsen der Hinterachse des Kraftfahrzeugs elektrisch oder elektromechanisch betätigbar. Die Radbremsen sind vorteilhafterweise mittels einer elektrischen Parkbremsfunktion betätigbar. So kann bei Ausfall der ersten Bremsensteuervorrichtung dennoch durch die zweite Bremsensteuervorrichtung elektrisch gesteuert an den entsprechenden Radbremsen Bremsmoment aufgebaut werden.

Bevorzugt umfasst die zweite Druckbereitstellungseinrichtung der zweiten Bremsensteuervorrichtung für jede der zur Drucksteuerung durch die zweite Bremsensteuervorrichtung vorgesehenen Radbremsen zumindest eine Pumpe, wobei jeweils die Saugseite der Pumpe mit dem entsprechenden Ausgangsdruckanschluss der ersten Bremsensteuervorrichtung verbunden ist. Entsprechende Pumpen werden bereits grundsätzlich verbreitet in konventionellen Bremsanlagen nach dem Rückförderprinzip eingesetzt, sind daher kostengünstig herstellbar.

Die zweite Druckbereitstellungseinrichtung ist vorteilhafterweise als Kombination eines, vorteilhafterweise einzigen, Elektromotors mit einer Anzahl von Pumpen ausgeführt, wobei die Anzahl der Pumpen der Anzahl der zur Drucksteuerung mittels der zweiten Bremsensteuervorrichtung vorgesehenen Radbremsen entspricht.

Bevorzugt ist die zweite Bremsensteuervorrichtung zur Druckbeaufschlagung zumindest der Radbremsen einer Vorderachse des Kraftfahrzeugs vorgesehen. Besonders bevorzugt wird die Gruppe von Radbremsen durch die hydraulisch betätigbaren Radbremsen einer Vorderachse des Kraftfahrzeugs gebildet. Besonders bevorzugt sind dann die Radbremsen einer Hinterachse des Kraftfahrzeugs sowohl hydraulisch betätigbar als auch elektromechanisch betätigbar ausgeführt.

Alternativ ist es bevorzugt, dass die zweite Bremsensteuervorrichtung zur Druckbeaufschlagung aller Radbremsen ausgebildet ist, d.h. dass die Gruppe von Radbremsen durch alle Radbremsen gebildet wird.

Die zweite Bremsensteuervorrichtung umfasst bevorzugt für jede der Radbremsen der Gruppe von Radbremsen einen radindividuellen Eingangsdruckanschluss sowie einen radindividuellen Ausgangsdruckanschluss. Dabei ist jeweils der Eingangsdruckanschluss der zweiten Bremsensteuervorrichtung mit dem der Radbremse zugeordneten Ausgangsdruckanschluss der ersten Bremsensteuervorrichtung und der Ausgangsdruckanschluss der zweiten Bremsensteuervorrichtung mit der Radbremse verbunden.

Gemäß einer bevorzugten Ausführungsform der erfindungsgemäßen Bremsanlage ist die erste Bremsensteuervorrichtung als eine bauliche Einheit in Form eines Bremsensteuergeräts mit einer ersten elektronischen Steuer- und Regeleinheit und einer ersten hydraulischen Steuer- und Regeleinheit ausgeführt, wobei die erste elektronische Steuer- und Regeleinheit zur Ansteuerung der Einlass- und Auslassventile und der ersten Druckbereitstellungseinrichtung ausgebildet ist.

Bevorzugt ist die Bremsanlage derart ausgelegt, dass die zweite Bremsensteuervorrichtung bei Ausfällen der ersten Bremsensteuervorrichtung aktiv wird. Ausfall bedeutet, dass die erste Bremsensteuervorrichtung keinen oder einen nicht ausreichenden Druck aufbaut. In diesem Fall übernimmt die zweite Bremsensteuervorrichtung die Betätigung zumindest eines Teiles der Radbremsen.

Zur Erhöhung der Verfügbarkeit der Bremsanlage umfasst die Bremsanlage bevorzugt zumindest zwei, voneinander unabhängige elektrische Energiequellen. Besonders bevorzugt wird die erste Bremsensteuervorrichtung von einer ersten elektrischen Energiequelle und die zweite Bremsensteuervorrichtung von einer zweiten elektrischen Energiequelle mit elektrischer Energie versorgt.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage,
- Fig. 4: ein viertes Ausführungsbeispiel einer erfindungsgemäßen Bremsanlage,
- Fig. 5: ein fünftes Ausführungsbeispiel einer erfindungsgemäßen Bremsanlage,
- Fig. 6: ein sechstes Ausführungsbeispiel einer erfindungsgemäßen Bremsanlage,
- Fig. 7: ein siebtes Ausführungsbeispiel einer erfindungsgemäßen Bremsanlage,
- Fig. 8: ein achtes Ausführungsbeispiel einer erfindungsgemäßen Bremsanlage, und
- Fig. 9: beispielsgemäße Ausführungsformen eines Auslassventils mit parallel geschaltetem Rückschlagventil bzw. parallel geschalteten Rückschlagventilen.

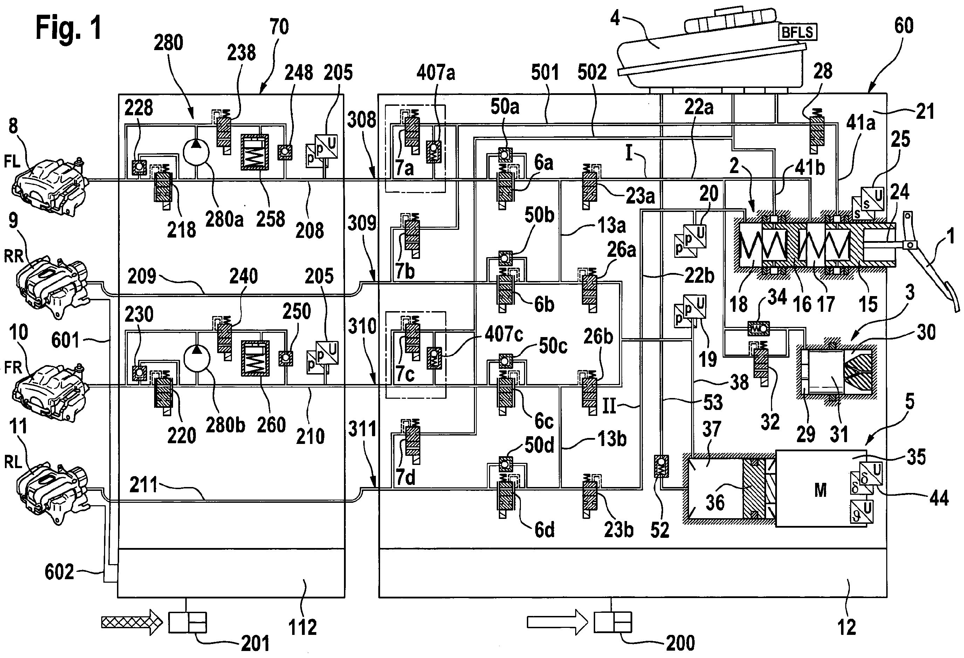

In Fig. 1 ist ein erstes Ausführungsbeispiel einer erfindungsgemäßen Bremsanlage dargestellt. Die Bremsanlage umfasst im Wesentlichen einen mittels eines Betätigungs- bzw. Bremspedals 1 betätigbaren Hauptbremszylinder 2, eine mit dem Hauptbremszylinder 2 zusammen wirkende Simulationseinrichtung 3, einen dem Hauptbremszylinder 2 zugeordneten, unter Atmosphärendruck stehenden Druckmittelvorratsbehälter 4, eine erste elektrisch steuerbare Druckbereitstellungseinrichtung 5, welche beispielsgemäß durch eine Zylinder-Kolben-Anordnung mit einer hydraulischen Druckkammer 37 gebildet wird, deren Kolben 36 durch einen elektromechanischen Aktuator verschiebbar ist, eine elektrisch steuerbare Druckmodulationseinrichtung mit einem Einlass- und einem Auslassventil 6a-6d, 7a-7d je Radbremse 8-11 zum Einstellen radindividueller Bremsdrücke, eine erste elektronische Steuer- und Regeleinheit 12, eine zweite elektrisch ansteuerbare Druckbereitstellungseinrichtung 280 und eine zweite elektronische Steuer- und Regeleinheit 112.

Der Hauptbremszylinder 2, die Simulationseinrichtung 3, die erste Druckbereitstellungseinrichtung 5, die weiter unten näher erläuterten Ventile 23a, 23b, 26a, 26b und die Einlass- und Auslassventile 6a-6d, 7a-7d sind Teil einer ersten Bremsensteuervorrichtung 60. Der ersten Bremsensteuervorrichtung 60 ist die erste elektronische Steuer- und Regeleinheit 12 zugeordnet.

Die zweite Druckbereitstellungseinrichtung 280 und weitere Ventile sind Teil einer zweiten Bremsensteuervorrichtung 70. Der zweiten Bremsensteuervorrichtung 70 ist die zweite elektronische Steuer- und Regeleinheit 112 zugeordnet.

Die nicht näher bezeichnete Druckmodulationseinrichtung der ersten Bremsensteuervorrichtung 60 umfasst beispielsgemäß je hydraulisch betätigbarer Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet sind. Der jeweilige Mittenanschluss bildet den radindividuellen Ausgangsdruckanschluss 308, 309, 310, 311 der ersten Bremsensteuervorrichtung 60 für die entsprechende Radbremse 8, 9, 10, 11.

Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an die Druckkammer 37 der elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes Rückschlagventil 50a-50d parallel geschaltet. In einer Rückfallbetriebsart können die Bremskreisversorgungsleitungen 13a, 13b über hydraulische Leitungen 22a, 22b mit den Drücken der Druckräume 17, 18 des Hauptbremszylinders 2 beaufschlagt werden. Die Ausgangsanschlüsse der Auslassventile 7a-7d sind paarweise (bremskreisweise) über eine separate Rücklaufleitung 501, 502 mit je einer Kammer des Druckmittelvorratsbehälters 4 verbunden.

Der Hauptbremszylinder 2 weist in einem Gehäuse 21 zwei hintereinander angeordnete Kolben 15, 16 auf, die hydraulische Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit je einer Kammer des Druckmittelvorratsbehälters 4 in Verbindung, wobei die Verbindungen durch eine Relativbewegung der Kolben 17, 18 im Gehäuse 21 absperrbar sind. Die Druckräume 17, 18 stehen andererseits mittels der hydraulischen Leitungen 22a, 22b mit den bereits genannten Bremskreisversorgungsleitungen 13a, 13b in Verbindung.

In der Druckausgleichsleitung 41a ist ein stromlos offenes Diagnoseventil 28 angeordnet.

Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptbremszylinder-)Kolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

In den an die Druckräume 17, 18 angeschlossenen Leitungsabschnitten 22a, 22b ist je ein Trennventil 23a, 23b angeordnet, welches als ein elektrisch betätigbares, vorzugsweise stromlos offenes, 2/2-Wegeventil ausgebildet ist. Durch die Trennventile 23a, 23b kann die hydraulische Verbindung zwischen den Druckräumen 17, 18 des Hauptbremszylinders 2 und den Bremskreisversorgungsleitungen 13a, 13b abgesperrt werden.

Ein an den Leitungsabschnitt 22b angeschlossener Drucksensor 20 erfasst den im Druckraum 18 durch ein Verschieben des zweiten Kolbens 16 aufgebauten Druck.

Die Simulationseinrichtung 3 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorventils 32 mit dem ersten Druckraum 17 des Hauptbremszylinders 2 verbindbar. Bei Vorgabe einer Pedalbewegung und geöffnetem Simulatorventil 32 strömt Druckmittel vom Hauptbremszylinder-Druckraum 17 in die Simulatorkammer 29. Dadurch wird der Simulatorkolben 31 verschoben und die Rückstellkraft des elastischen Elements bewirkt einen hydraulischen Druckanstieg. Dieser hydraulische Druck wirkt auch im Druckraum 17 des Hauptbremszylinders 2 und erzeugt durch Beaufschlagung des Kolbens 15 einen wesentlichen Anteil der Pedalkraft. Somit ist die Bremspedalcharakteristik, d.h. die Relation zwischen Rückstellkraft des Bremspedals und Bremspedalweg, im Wesentlichen durch die mechanischen Eigenschaften des elastischen Elements festgelegt, während eine Bedämpfung der Pedalbetätigung durch die Durchströmungscharakteristik der hydraulischen Übertragung der Hauptzylinderkolbenbewegung auf die Simulatorkolbenbewegung realisiert ist. Ein hydraulisch antiparallel zum Simulatorventil 32 angeordnetes Rückschlagventil 34 ermöglicht dabei unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen der Simulationseinrichtung 3 sowie Anbindungen der Simulationseinrichtung 3 an den Hauptbremszylinder 2 sind denkbar.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, deren/ dessen Kolben 36, welcher die Druckkammer 37 begrenzt, von einem schematisch angedeuteten Elektromotor 35 unter Zwischenschaltung eines ebenfalls schematisch dargestellten Rotations-Translations-Getriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden.

Der durch die Kraftwirkung des Kolbens 36 auf das in der Druckkammer 37 eingeschlossene Druckmittel erzeugte Aktuatordruck wird in die Systemdruckleitung 38 eingespeist und mit einem vorzugsweise redundant ausgeführten Drucksensor 19 erfasst. Bei geöffneten Zuschaltventilen 26a, 26b (und offenen Einlassventilen 6a-6d) gelangt das Druckmittel zu den Ausgangsdruckanschlüssen 308-311 und steht zur Betätigung der Radbremsen 8, 9, 10, 11 zur Verfügung. Durch Vor- und Zurückschieben des Kolbens 36 erfolgt so bei geöffneten Zuschaltventilen 26a, 26b mittels der ersten Bremsensteuervorrichtung 60 (z.B. bei einer Normalbremsung in der "Brake-by-Wire"-Betriebsart) ein Radbremsdruckaufbau und -abbau für die Radbremsen 8, 9, 10, 11.

Während einer ABS-geregelten Bremsung werden anders als bei einer Normalbremsung radindividuell unterschiedliche Radbremsdrücke benötigt. Diese werden dadurch realisiert, dass mit der elektrisch steuerbaren Druckbereitstellungseinrichtung 5 ein für alle Radbremsen ausreichend hoher Systemdruck bereitgestellt wird, aus dem mit Hilfe der Einlassventile 6a-6d und der Auslassventile 7a-7d die benötigten Radbremsdrücke einzeln abgeleitet werden. Dabei strömt das über die Auslassventile 7a-7d abgelassene Druckmittel in den Druckmittelvorratsbehälter 4, so dass der Druckmittel-Volumenvorrat in der Druckkammer 37 im Laufe einer ABS-geregelten Bremsung abnimmt. Bevor dieser Volumenvorrat erschöpft ist wird dieser durch einen in die ABS-Regelaktivitäten zeitlich eingepassten Nachsaugprozess wieder ergänzt.

Zum Nachsaugen von Druckmittel in die erste Druckbereitstellungseinrichtung 5, z.B. nachdem Druckmittel während einer ABS-Regelung über ein Auslassventil 7 in den Druckmittelvorratsbehälter 4 abgelassen wurde, ist eine hydraulische Verbindungsleitung 53 zwischen der Druckkammer 37 der ersten Druckbereitstellungseinrichtung 5 und dem Druckmittelvorratsbehälter 4 vorgesehen. Beispielsgemäß ist ein in Richtung der Druckkammer öffnendes Rückschlagventil 52 in der Verbindungsleitung 53 vorgesehen. Damit kann die erste Druckbereitstellungseinrichtung 5 durch ein einfaches Zurückfahren des Kolbens 36 nachgeladen werden.

Der Ansteuerung der elektrisch betätigbaren Komponenten, insbesondere der Ventile 6a-6d, 7a-7d, 23a, 23b, 26a, 26b, 28, 32 und des Elektromotors 35 der Druckbereitstellungseinrichtung 5, der ersten Bremsensteuervorrichtung (60) dient die erste elektronische Steuer- und Regeleinheit 12. Die Signale der Sensoren 19, 20, 25 und 44 werden ebenso in der elektronische Steuer- und Regeleinheit 12 verarbeitet.

Um ein Ansaugen von Druckmittel durch die erste Bremsensteuervorrichtung 60 hindurch zu ermöglichen, ist gemäß dem Ausführungsbeispiel der Fig. 1 den Auslassventilen 7a und 7c jeweils ein in Richtung des Ausgangsdruckanschlusses 308 bzw. 310 öffnendes Rückschlagventil 407a bzw. 407c parallel geschaltet.

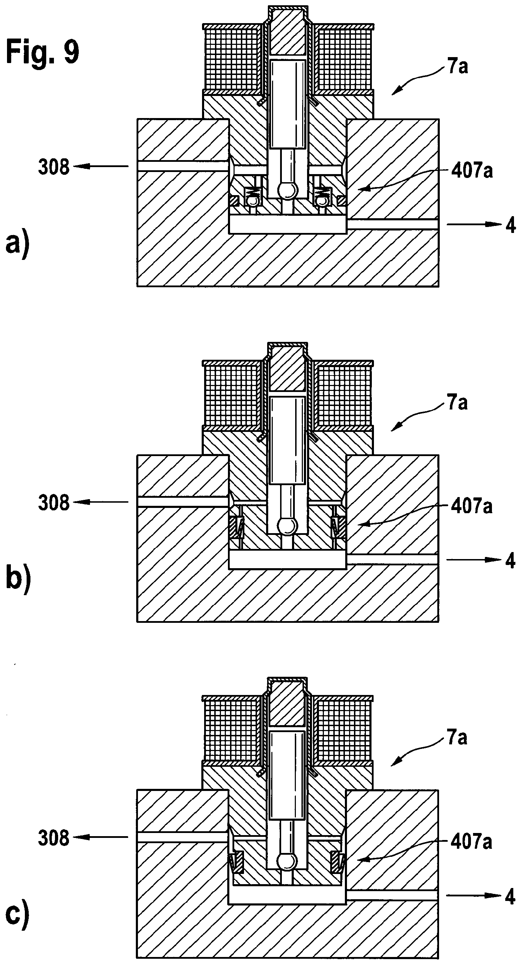

In Fig. 9 sind anhand des Beispiels des Auslassventils 7a und Rückschlagventils 407a drei beispielsgemäße, konstruktive Ausführungsvarianten einer Kombination eines Auslassventils mit einem hydraulisch parallel geschalteten Rückschlagventil dargestellt. Der Anschluss der Kombination zum Druckmittelvorratsbehälter 4 ist dabei auf der rechten Seite und der Anschluss zum Ausgangsdruckanschluss 308 der ersten Bremsensteuervorrichtung 60 ist auf der linken Seite dargestellt. Das in Fig. 9a dargestellte Rückschlagventil umfasst eine Kugel, einen Kugelsitz und eine Feder. Fig. 9b zeigt die Verwendung eines Dichtrings mit einer mit dem Ventilschaft zusammenwirkenden Dichtlippe zur Darstellung der Rückschlagventilfunktion. Fig. 9c zeigt ein Auslassventil 7 mit einem Elastomerdichtring mit einer Dichtlippe, die mit der Wand der Ventilaufnahmebohrung zusammenwirkt, um die Rückschlagventilfunktion darzustellen.

Die zweite Bremsensteuervorrichtung 70 ist beispielsgemäß hydraulisch in Reihe zwischen die Ausgangsdruckanschlüsse 308, 309, 310, 311 der ersten Bremsensteuervorrichtung 60 und die Radbremsen 8, 9, 10, 11 geschaltet. Da die zweite Bremsensteuervorrichtung 70 für die Radbremsen 9 und 11 nur eine hydraulische Verbindungsleitung 209 bzw. 211 (zwischen Ausgangsdruckanschluss und Radbremse) umfasst und keine "aktiven" hydraulischen Komponenten, insbesondere keine Pumpe oder kein Ventil, können die Radbremsen 9 und 11 auch direkt mit den Ausgangsdruckanschlüssen 309, 311 der ersten Bremsensteuervorrichtung verbunden sein, d.h. die zweite Bremsensteuervorrichtung 70 kann alternativ hydraulisch in Reihe zwischen (nur) die Ausgangsdruckanschlüsse 308 und 310 der ersten Bremsensteuervorrichtung 60 und die Radbremsen 8 und 10 geschaltet sein.

Die zweite Bremsensteuervorrichtung 70 umfasst für jede der Radbremsen 8 und 10, die auch mittels der zweiten Bremsensteuervorrichtung 70 mit Druck beaufschlagbar sind, eine hydraulische Verbindungsleitung 208 bzw. 210 für die Verbindung zwischen Ausgangsdruckanschluss 308, 310 und Radbremse 8, 10, in welcher ein elektrisch betätigbares Trennventil 218, 220 angeordnet ist. Das Trennventil 218, 220 ist vorteilhafterweise stromlos offen ausgeführt. Das Trennventil 218, 220 ist beispielsgemäß analog ansteuerbar. Dem Trennventil 218, 220 ist ein in Richtung der Radbremse öffnendes Rückschlagventil 228, 230 parallel geschaltet.

Die zweite Bremsensteuervorrichtung 70 umfasst für jede der Radbremsen 8 und 10 eine Pumpe 280a, 280c. Die Pumpen werden beispielsgemäß von einem nicht dargestellten Elektromotor gemeinsam angetrieben.

Die Saugseite der Pumpe 280a, 280c ist mit dem zugeordneten Ausgangsdruckanschluss 308, 310 der ersten Bremsensteuervorrichtung 60 verbunden. Die Druckseite der Pumpe 280a, 280c ist mit dem Ausgangsdruckanschluss der zweiten Bremsensteuervorrichtung 70, d.h. der Radbremse 8, 10, verbunden.

Beispielsgemäß ist die Druckseite der Pumpe 280a, 280c über eine hydraulische Verbindung, in welcher ein elektrisch betätigbares Ablassventil 238, 240 sowie ein in Richtung des Ausgangsdruckanschlusses 308, 310 öffnendes Rückschlagventil 248, 250 angeordnet ist, mit dem Ausgangsdruckanschlusses 308, 310 (bzw. der Saugseite der Pumpe) verbunden. Das Ablassventil ist vorteilhafterweise stromlos geschlossen ausgeführt.

Mittels des Ablassventils 238, 240 kann Druckmittel aus der Radbremse 8, 10 in einen Niederdruckspeicher 258, 260 abgelassen werden.

Die zweite Bremsensteuervorrichtung 70 umfasst weiter für jede der Radbremsen 8 und 10 einen Drucksensor 205, welcher den entsprechenden radindividuellen Eingangsdruck an der zweiten Bremsensteuervorrichtung 70 erfasst (entspricht dem Druck des Ausgangsdruckanschlusses 308 bzw. 310).

Der Ansteuerung der elektrisch betätigbaren Komponenten der zweiten Bremsensteuervorrichtung 70, insbesondere der Ventile 218, 220, 238, 240 und der zweiten Druckbereitstellungseinrichtung 280, dient die zweite elektronische Steuer- und Regeleinheit 112. Die Signale der Sensoren 205 werden ebenso in der zweiten elektronischen Steuer- und Regeleinheit 112 verarbeitet.

Da die zweite Bremsensteuervorrichtung 70 der beispielsgemäßen Bremsanlage der Fig. 1 nicht zur aktiven Druckbeaufschlagung der Radbremsen 9 und 11 ausgebildet ist, sind die Radbremsen 9, 11 beispielsgemäß auch elektrisch betätigbar ausgeführt, z.B. durch eine elektrische Parkbremsfunktion. Hierzu sind elektrische Ansteuerleitungen 601, 602 von der zweiten elektronischen Steuer- und Regeleinheit 112 zu den Radbremsen 9, 11 vorgesehen, über welche die zweite Bremsensteuervorrichtung 70 die Radbremsen 9 und 11 ansteuern kann, falls die erste Bremsensteuervorrichtung 60 ausfällt. In diesem Fall werden die Radbremsen 8, 10 mittels der zweiten Bremsensteuervorrichtung 70 mit Druck beaufschlagt und die Radbremsen 9, 11 von der zweiten Bremsensteuervorrichtung 70 elektrisch betätigt.

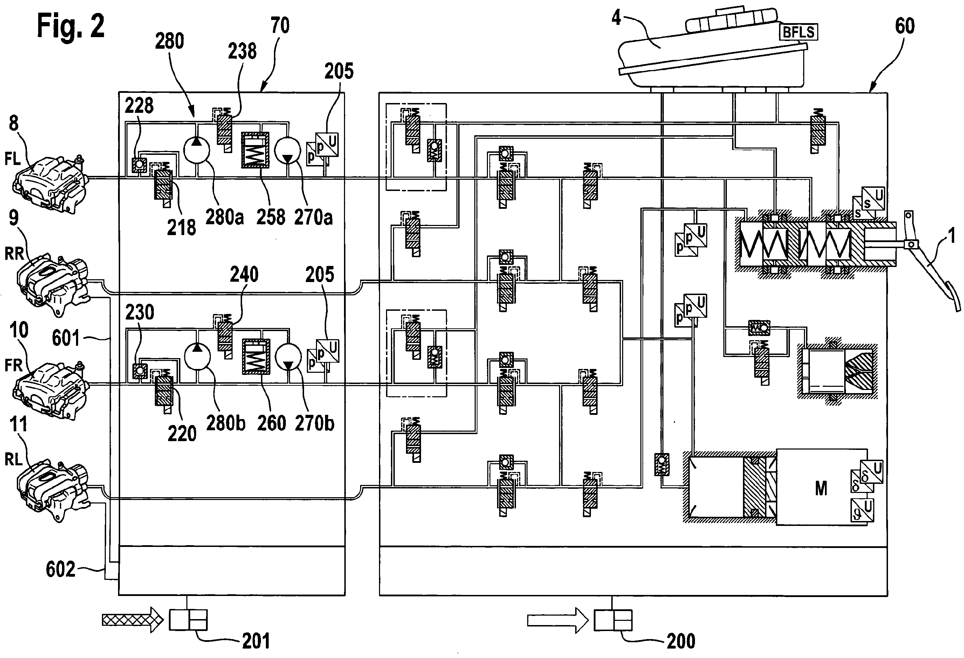

In Fig. 2 ist ein zweites Ausführungsbeispiel einer erfindungsgemäßen Bremsanlage dargestellt. Die erste Bremsensteuervorrichtung 60 des zweiten Ausführungsbeispiels entspricht der des ersten Ausführungsbeispiels der Fig. 1, weshalb die Bezugszeichen der entsprechenden Komponenten nicht nochmals alle im Einzelnen in Fig. 2 aufgeführt sind. Die zweite Bremsensteuervorrichtung 70 des zweiten Ausführungsbeispiels entspricht der des ersten Ausführungsbeispiels der Fig. 1, aber umfasst zusätzlich je Radbremse 9 und 11 eine weitere Pumpe 270a, 270b, welche anstelle des Rückschlagventils 248, 250 des ersten Ausführungsbeispiels angeordnet ist. Mittels der Pumpe 270a, 270b kann aktiv Druckmittel aus dem Niederdruckspeicher 258, 260 rückgefördert werden.

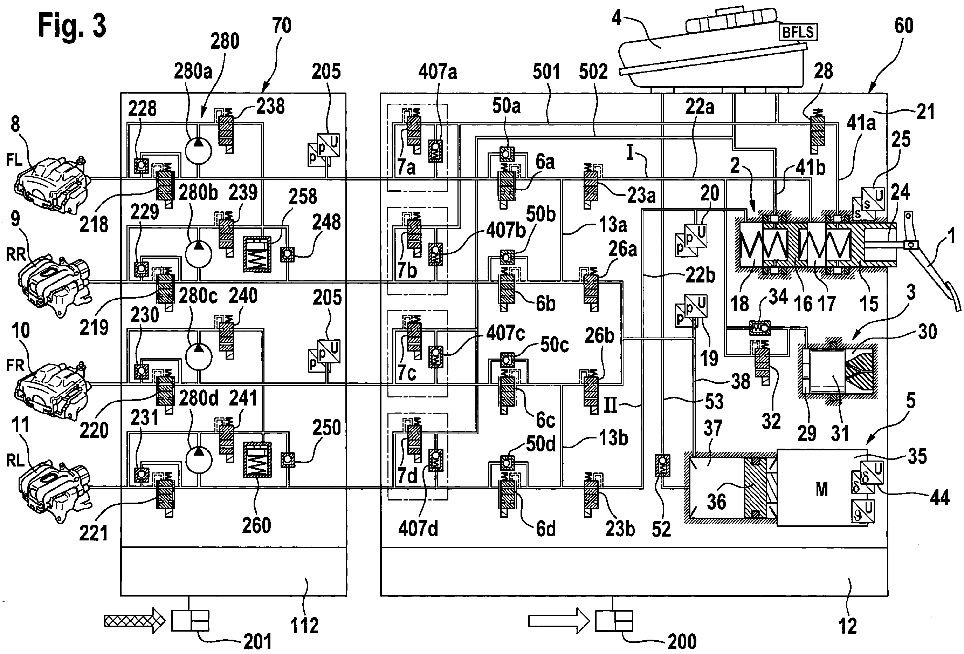

In Fig. 3 ist ein drittes Ausführungsbeispiel einer erfindungsgemäßen Bremsanlage dargestellt. Im Unterschied zur ersten Bremsensteuervorrichtung der Fig. 1 umfasst die erste Bremsensteuervorrichtung 60 des dritten Ausführungsbeispiels für jedes Auslassventil 7a-7d ein diesem parallel geschaltetes Rückschlagventil 407a-407d. Weiterhin umfasst die zweite Bremsensteuervorrichtung 70 für jede Radbremse 8-11 ein Proportional-Stromventil 218-221 mit parallel geschaltetem Rückschlagventil 228-231, eine Pumpe 280a-280d und ein Ablassventil 238-241 entsprechend dem ersten Ausführungsbeispiel. Dabei ist je zwei Radbremsen eines Bremskreises I, II (d.h. Radbremsen 8, 9 und 10, 11) ein "gemeinsamer" Niederdruckspeicher 258 bzw. 260 und ein "gemeinsames" Rückschlagventil 248 bzw. 250 zugeordnet.

Da die zweite Bremsensteuervorrichtung 70 der beispielsgemäßen Bremsanlage der Fig. 3 zur aktiven Druckbeaufschlagung aller Radbremsen 8-11 ausgebildet ist, brauchen die Radbremsen 9, 11 nicht elektrisch betätigbar ausgeführt sein. Entsprechend kann auf die Ansteuerleitungen 601, 602 gemäß des dritten Ausführungsbeispiels der Fig. 1 verzichtet werden.

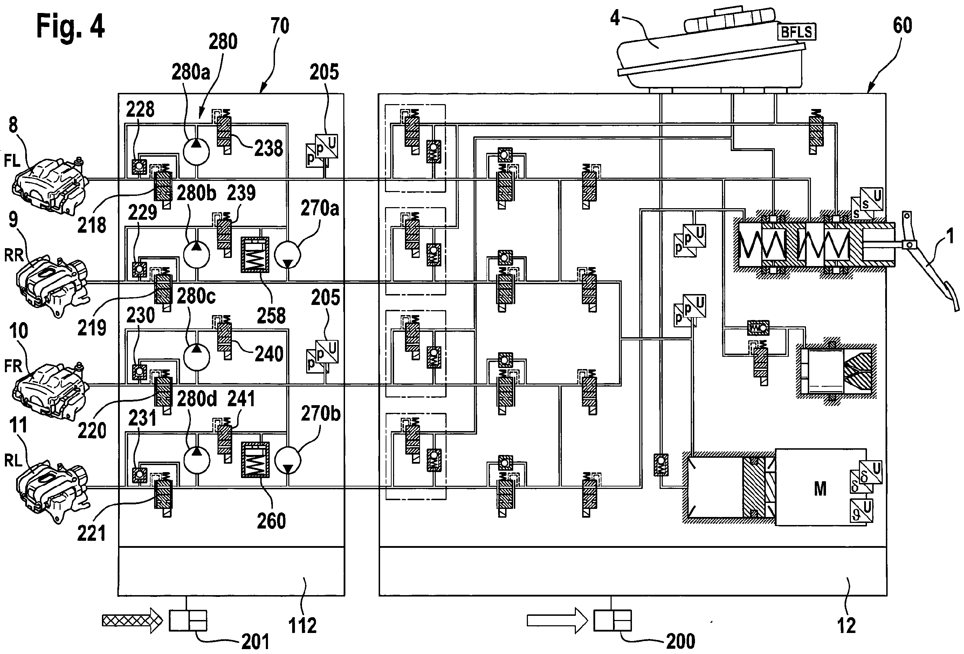

In Fig. 4 ist ein viertes Ausführungsbeispiel einer erfindungsgemäßen Bremsanlage dargestellt. Dieses entspricht weitgehend dem dritten Ausführungsbeispiel, wobei (analog zu Fig. 2) die zweite Bremsensteuervorrichtung 70 zusätzlich eine weitere Pumpe 270a, 270b je Niederdruckspeicher umfasst, welche anstelle des Rückschlagventils 248, 250 (der Fig. 1) angeordnet ist.

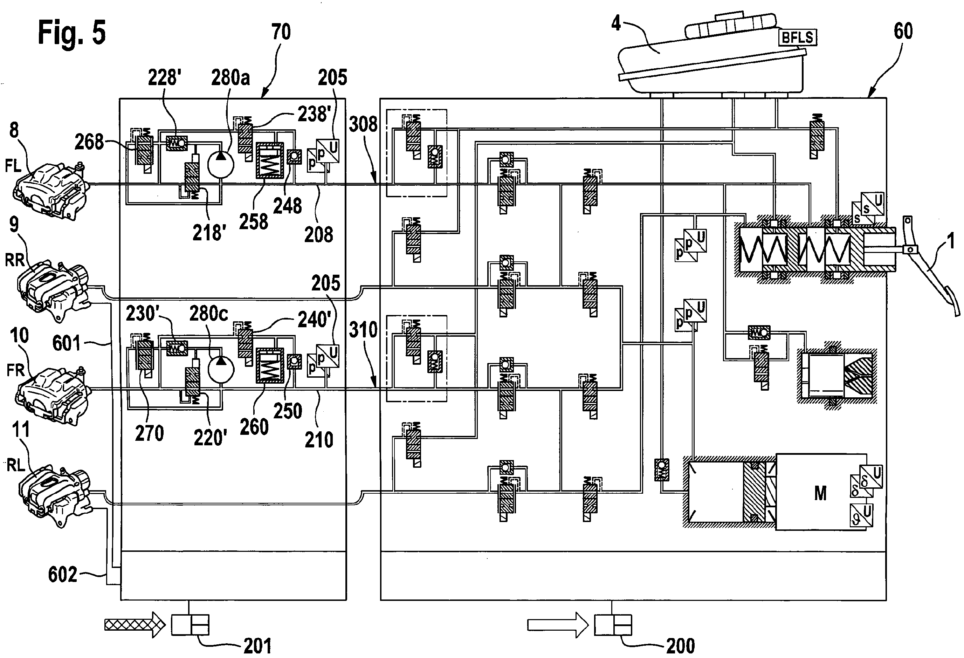

In Fig. 5 ist ein fünftes Ausführungsbeispiel einer erfindungsgemäßen Bremsanlage dargestellt. Die erste Bremsensteuervorrichtung 60 entspricht der des ersten Ausführungsbeispiels der Fig. 1, weshalb auch hier auf die Bezugszeichen im Einzelnen in Fig. 5 verzichtet wurde. Die beispielsgemäße zweite Bremsensteuervorrichtung 70 umfasst für die Radbremsen 8 und 10, die mittels der zweiten Druckbereitstellungseinrichtung 280 mit Druck beaufschlagbar sind, eine hydraulische Verbindungsleitung 208 bzw. 210 für die Verbindung zwischen Ausgangsdruckanschluss 308, 310 und Radbremse 8, 10, in welcher ein hydraulisch betätigbares Trennventil 218', 220' angeordnet ist. Das Trennventil 218', 220' ist vorteilhafterweise drucklos offen ausgeführt. Die zweite Bremsensteuervorrichtung 70 umfasst für jede der Radbremsen 8 und 10 eine Pumpe 280a, 280c. Die Pumpen werden beispielsgemäß von einem nicht dargestellten Elektromotor gemeinsam angetrieben. Die Saugseite der Pumpe 280a, 280c ist mit dem zugeordneten Ausgangsdruckanschluss 308, 310 der ersten Bremsensteuervorrichtung 60 verbunden.

Die Druckseite der Pumpe 280a, 280c ist über ein in Richtung der Radbremse öffnendes Rückschlagventil 228', 230' mit dem Ausgangsdruckanschluss der zweiten Bremsensteuervorrichtung 70, d.h. der Radbremse 8, 10, verbunden. Die Druckseite der Pumpe 280a, 280c ist auch mit dem Steueranschluss des Trennventils 218', 220' verbunden.

Beispielsgemäß ist die Druckseite der Pumpe 280a, 280c über das Rückschlagventil 228', 230', ein elektrisch betätigbares Ablassventil 238', 240' sowie ein in Richtung des Ausgangsdruckanschlusses 308, 310 öffnendes Rückschlagventil 248, 250 mit dem Ausgangsdruckanschlusses 308, 310 (bzw. der Saugseite der Pumpe) verbunden. Das Ablassventil 238', 240' ist vorteilhafterweise stromlos geschlossen ausgeführt. Mittels des Ablassventils 238', 240' kann Druckmittel aus der Radbremse 8, 10 in einen Niederdruckspeicher 258, 260 abgelassen werden.

Beispielsgemäß ist die Druckseite der Pumpe 280a, 280c über das Rückschlagventil 228', 230' und ein elektrisch betätigbares Ventil 268, 270 mit ihrer Saugseite verbunden. Das Ventil 268, 270 ist vorteilhafterweise stromlos offen ausgeführt. Das Ventil 268, 270 ist beispielsgemäß analog ansteuerbar.

Die zweite Bremsensteuervorrichtung 70 umfasst weiter für jede der Radbremsen 8 und 10 einen Drucksensor 205, welcher den entsprechenden radindividuellen Eingangsdruck an der zweite Bremsensteuervorrichtung 70 erfasst (entspricht dem Druck des Ausgangsdruckanschlusses 308 bzw. 310).

Da die zweite Bremsensteuervorrichtung 70 der beispielsgemäßen Bremsanlage der Fig. 5 nicht zur aktiven Druckbeaufschlagung der Radbremsen 9 und 11 ausgebildet ist, sind die Radbremsen 9, 11 beispielsgemäß auch elektrisch betätigbar ausgeführt, wie es z.B. zur Realisierung einer elektrischen Parkbremsfunktion an sich bekannt ist. Hierzu sind elektrische Ansteuerleitungen 601, 602 von der zweiten elektronischen Steuer- und Regeleinheit 112 zu den Radbremsen 9, 11 vorgesehen, über welche die zweite Bremsensteuervorrichtung 70 die Radbremsen 9 und 11 ansteuern kann, falls die erste Bremsensteuervorrichtung 60 ausfällt.

Die beispielsgemäße zweite Bremsensteuervorrichtung 70 besitzt durch die hydraulisch betätigbaren Trennventile 218', 220' einen niedrigeren Durchströmwiderstand. Bei elektromagnetisch betätigten Ventilen muss darauf geachtet werden, dass die durchzulassenden, zu drosselnden oder abzusperrenden hydraulischen Querschnitte so klein sind, dass sie bei den auftretenden Drücken nur hydraulische Kräfte erzeugen, die kleiner sind als die elektrisch erzeugte Magnetkraft des Ventilantriebs. Für die beispielsgemäßen hydraulisch betätigten Ventile 218', 220' können größere hydraulische Querschnitte gewählt werden, weil über ihre Ansteuerung mit Hilfe des Pumpendrucks größere Ventilstellkräfte realisierbar sind.

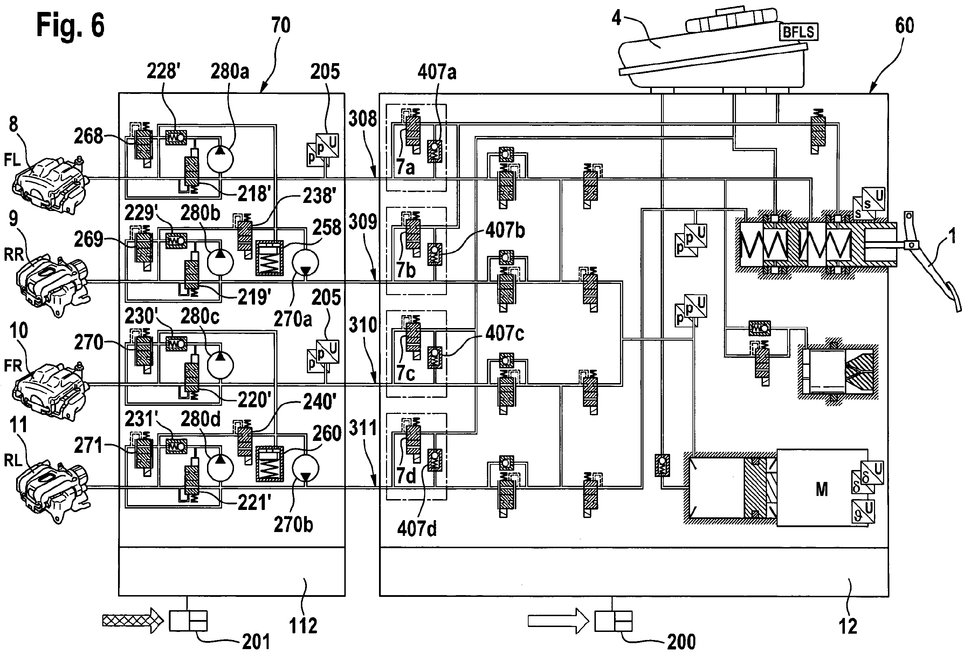

In Fig. 6 ist ein sechstes Ausführungsbeispiel einer erfindungsgemäßen Bremsanlage dargestellt. Die erste Bremsensteuervorrichtung 60 entspricht der des dritten Ausführungsbeispiels der Fig. 3 und umfasst für jedes Auslassventil 7a-7d ein diesem parallel geschaltetes Rückschlagventil 407a-407d. Weiterhin umfasst die zweite Bremsensteuervorrichtung 70 für jede Radbremse 8-11 ein hydraulisch betätigbares Trennventil 218'-221', eine Pumpe 280a-280d, ein Rückschlagventil 228'-231' und ein Ventil 268-271 (analog dem fünften Ausführungsbeispiel). Dabei ist den Radbremsen eines Bremskreises I, II (d.h. Radbremsen 8, 9 und 10, 11) je ein "gemeinsamer" Niederdruckspeicher 258 bzw. 260 zugeordnet. Je Niederdruckspeicher 258 bzw. 260 ist eine weitere Pumpe 270a bzw. 270b vorgesehen, deren Saugseite mit dem Niederdruckspeicher 258 bzw. 260 und deren Druckseite mit dem Ausgangsdruckanschluss 309 bzw. 311 verbunden ist. Mittels der Pumpe 270a, 270b kann aktiv Druckmittel aus dem Niederdruckspeicher 258, 260 rückgefördert werden.

Da die zweite Bremsensteuervorrichtung 70 der beispielsgemäßen Bremsanlage der Fig. 6 zur aktiven Druckbeaufschlagung aller Radbremsen 8-11 ausgebildet ist, brauchen die Radbremsen 9, 11 nicht elektrisch betätigbar ausgeführt sein. Entsprechend kann auf die Ansteuerleitungen 601, 602 der Fig. 5 verzichtet werden.

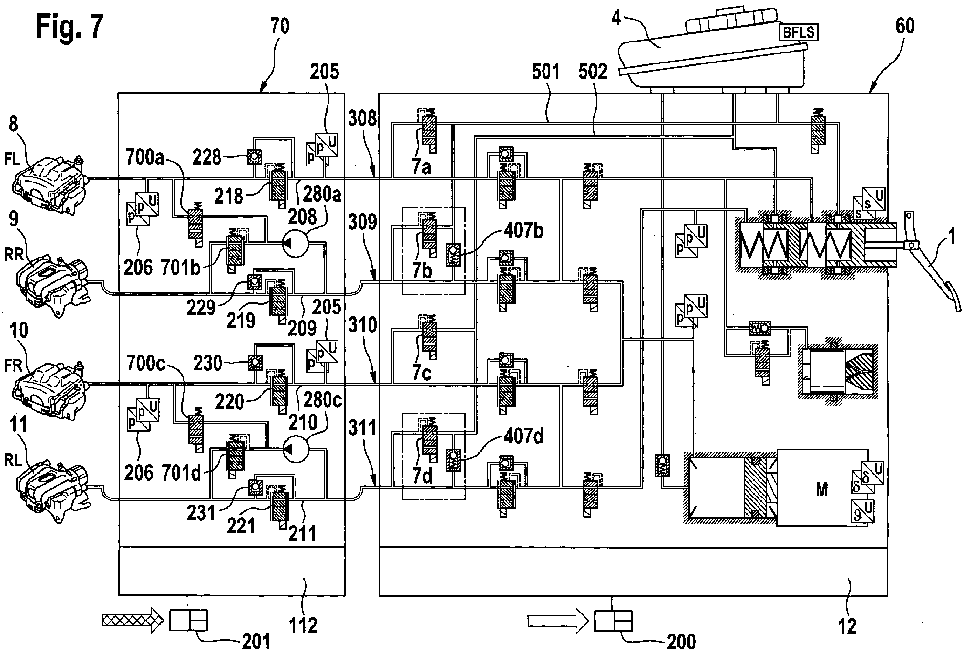

In Fig. 7 ist ein siebtes Ausführungsbeispiel einer erfindungsgemäßen Bremsanlage dargestellt. Die erste Bremsensteuervorrichtung 60 entspricht grundsätzlich der des ersten Ausführungsbeispiels der Fig. 1, wobei jedoch hier nur für die Auslassventile 7b und 7d jeweils ein dem Auslassventil parallel geschaltetes Rückschlagventil 407b bzw. 407d vorgesehen ist.

Die zweite Bremsensteuervorrichtung 70 umfasst für jede der Radbremsen 8-11 eine hydraulische Verbindungsleitung 208-211 zur Verbindung des entsprechenden Ausgangsdruckanschlusses 308-311 mit der entsprechenden Radbremse 8-11. In jeder Verbindungsleitung 208-211 ist ein elektrisch betätigbares Trennventil 218-221 angeordnet. Das Trennventil 218-221 ist vorteilhafterweise stromlos offen ausgeführt. Das Trennventil 218-221 ist beispielsgemäß analog ansteuerbar. Dem Trennventil 218-221 ist je ein in Richtung der Radbremse öffnendes Rückschlagventil 228-231 parallel geschaltet.

Die beispielsgemäße zweite Bremsensteuervorrichtung 70 umfasst für die Verbindungsleitungen 208 und 210 jeweils einen ersten Drucksensor 205 und einen zweiten Drucksensor 206, wobei jeweils der Drucksensor 205 den Druck vor dem Trennventil 218, 220 (entspricht dem Druck des Ausgangsdruckanschlusses 308 bzw. 310) und der Drucksensor 206 den Druck hinter dem Trennventil 218, 220 (entspricht dem Druck der Radbremse 8 bzw. 10) erfasst.

Je Bremskreis I, II (d.h. je Radbremsen-Paar 8, 9 und 10, 11) ist eine Pumpe 280a, 280c vorgesehen. Die Pumpen werden beispielsgemäß von einem nicht dargestellten Elektromotor gemeinsam angetrieben. Die Saugseite der Pumpe 280a bzw. 280c ist mit dem Ausgangsdruckanschluss 309 bzw. 311 der ersten Bremsensteuervorrichtung 60 verbunden, für welchen in der ersten Bremsensteuervorrichtung 60 ein Rückschlagventil 407b, 407d vorgesehen ist.

Die Druckseite der Pumpe 280a (bzw. 280c) ist zum einen über ein elektrisch betätigbares Ventil 701b (bzw. 701d) mit dem Ausgangsdruckanschluss der zweiten Bremsensteuervorrichtung 70, welcher dem Ausgangsdruckanschluss 309 (bzw. 311) entspricht, (d.h. mit der Radbremse 9 (bzw. 11) zu der ein Rückschlagventil 407b (bzw. 407d) in der ersten Bremsensteuervorrichtung 60 vorgesehen ist) verbunden, und zum anderen über ein elektrisch betätigbares Ventil 700a (bzw. 700c) mit dem Ausgangsdruckanschluss der zweiten Bremsensteuervorrichtung 70, welcher zu der anderen Radbremse des Bremskreises I, II korrespondiert, (d.h. mit der Radbremse 8 (bzw. 10) zu der kein Rückschlagventil 407 in der ersten Bremsensteuervorrichtung 60 vorgesehen ist) verbunden.

Das Ventil 701b, 701d ist vorteilhafterweise stromlos offen ausgeführt. Das Ventil 701b, 701d ist beispielsgemäß analog ansteuerbar ausgeführt. Das Ventil 700a, 700c ist vorteilhafterweise stromlos geschlossen ausgeführt.

Die beispielsgemäße Bremsanlage ermöglicht eine individuelle Druckstellung für die vier Radbremsen 8-11 mit nur zwei Pumpen 280a, 280c.

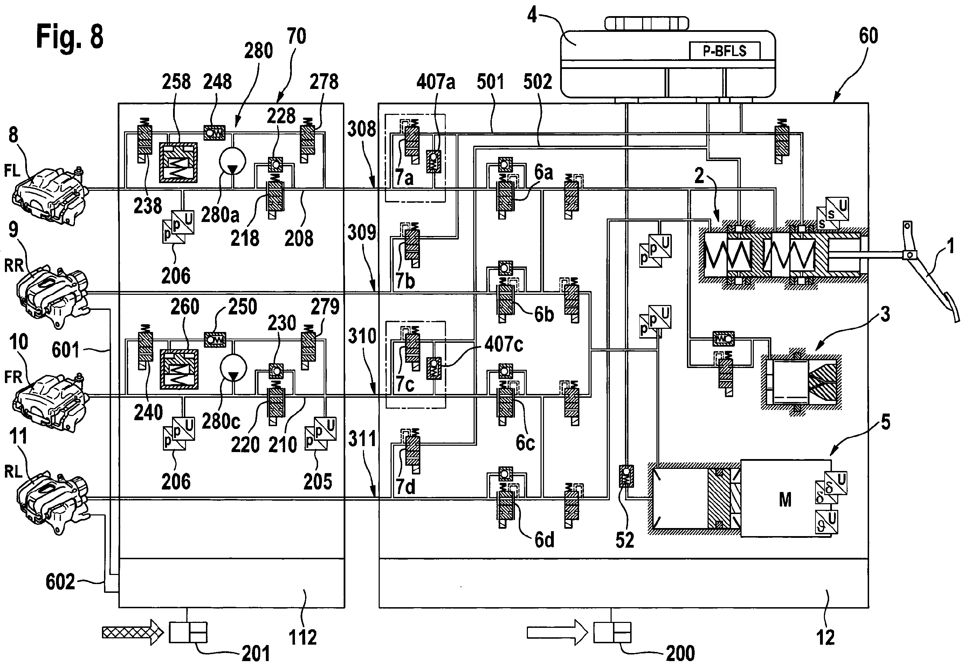

In Fig. 8 ist ein achtes Ausführungsbeispiel einer erfindungsgemäßen Bremsanlage dargestellt. Die erste Bremsensteuervorrichtung 60 entspricht der des ersten Ausführungsbeispiels der Fig. 1.

Die zweite Bremsensteuervorrichtung 70 des achten Ausführungsbeispiels umfasst für jede der Radbremsen 8 und 10, die auch mittels der zweiten Druckbereitstellungseinrichtung 280 mit Druck beaufschlagbar sind, eine hydraulische Verbindungsleitung 208 bzw. 210 für die Verbindung zwischen Ausgangsdruckanschluss 308, 310 und Radbremse 8, 10, in welcher ein elektrisch betätigbares Trennventil 218, 220 angeordnet ist. Das Trennventil 218, 220 ist vorteilhafterweise stromlos offen ausgeführt. Das Trennventil 218, 220 ist beispielsgemäß analog ansteuerbar. Dem Trennventil 218, 220 ist ein in Richtung der Radbremse öffnendes Rückschlagventil 228, 230 parallel geschaltet.

Die zweite Bremsensteuervorrichtung 70 umfasst für jede der Radbremsen 8 und 10 eine Pumpe 280a, 280c. Die Pumpen werden beispielsgemäß von einem nicht dargestellten Elektromotor gemeinsam angetrieben.

Die Druckseite der Pumpe 280a, 280c ist mittels des radbremsseitigen Verbindungsleitungsabschnitts von 208, 210 direkt mit der Radbremse 8, 10 verbunden. An diesen Abschnitt ist je ein Drucksensor 206 angeschlossen, welcher also den Druck hinter dem Trennventil 218, 220 (entspricht dem Druck der Radbremse 8 bzw. 10) erfasst.

Zur Erfassung des Druckes vor dem Trennventil 220 (entspricht dem Druck des Ausgangsdruckanschlusses 310) ist ein Drucksensor 205 vorgesehen.

Die Saugseite der Pumpe 280a bzw. 280c ist zum einen über ein elektrisch betätigbares, vorteilhafterweise stromlos geschlossenes, Ventil 278 bzw. 279 mit dem zugeordneten Ausgangsdruckanschluss 308 bzw. 310 der ersten Bremsensteuervorrichtung 60 verbunden. Zum anderen ist die Saugseite der Pumpe 280a bzw. 280c über eine hydraulische Verbindung, in welcher ein in Richtung der Pumpensaugseite öffnendes Rückschlagventil 248 bzw. 250 angeordnet ist, mit einem Niederdruckspeicher 258 bzw. 260 verbunden.

Die Radbremse 8, 10 ist wiederum über ein elektrisch betätigbares Ablassventil 238, 240 mit dem Niederdruckspeicher 258, 260 verbunden. Das Ablassventil ist vorteilhafterweise stromlos geschlossen ausgeführt.

Mittels des Ablassventils 238, 240 kann Druckmittel aus der Radbremse 8, 10 in einen Niederdruckspeicher 258, 260 abgelassen werden.

Da die zweite Bremsensteuervorrichtung 70 der beispielsgemäßen Bremsanlage der Fig. 8 nicht zur aktiven Druckbeaufschlagung der Radbremsen 9 und 11 ausgebildet ist, sind die Radbremsen 9, 11 beispielsgemäß auch elektrisch betätigbar ausgeführt, z.B. durch eine elektrische Parkbremsfunktion. Hierzu sind elektrische Ansteuerleitungen 601, 602 von der zweiten elektronischen Steuer- und Regeleinheit 112 zu den Radbremsen 9, 11 vorgesehen, über welche die zweite Bremsensteuervorrichtung 70 die Radbremsen 9 und 11 ansteuern kann, falls die erste Bremsensteuervorrichtung 60 ausfällt. In diesem Fall werden die Radbremsen 8, 10 mittels der zweiten Bremsensteuervorrichtung 70 mit Druck beaufschlagt und die Radbremsen 9, 11 von der zweiten Bremsensteuervorrichtung 70 elektrisch betätigt.

Die beispielsgemäßen Bremsanlagen (HAF Bremssysteme (HAF: Hochautomatisiertes Fahren)) der Fig. 1 bis 8 umfassen jeweils grundsätzlich vier hydraulisch betätigbare Radbremsen 8, 9, 10, 11, einen unter Atmosphärendruck stehen Druckmittelvorratsbehälter 4, eine erste elektrohydraulische Bremsensteuervorrichtung 60 (sog. Hauptbremsmodul), welche eine erste elektrisch ansteuerbare Druckbereitstellungseinrichtung 5, eine Druckregelventilanordnung mit radindividuellen Einlassventilen 6a-6d und Auslassventilen 7a-7d zum Einstellen radindividueller Bremsdrücke und für jede Radbremse einen radindividuellen Ausgangsdruckanschluss 308-311 umfasst, und eine zweite elektrohydraulische Bremsensteuervorrichtung 70 (sog. Backup-Modul), welche eine zweite elektrisch ansteuerbare Druckbereitstellungseinrichtung 280 und eine zweite Druckregelventilanordnung umfasst. Dabei ist die zweite elektrohydraulische Bremsensteuervorrichtung 70 für zumindest eine Gruppe von Radbremsen (wirkungsmäßig) in Reihe zwischen die zugehörigen Ausgangsdruckanschlüsse der ersten Bremsensteuervorrichtung 60 und die Radbremsen der Gruppe von Radbremsen geschaltet. Beispielsgemäß umfasst die Gruppe zwei oder vier Radbremsen.

Beispielsgemäß sind in den Fig. 1 bis 8 die Radbremsen 8 und 10 dem linken Vorderrad FL und dem rechten Vorderrad FR, und die Radbremsen 9 und 11 dem rechten Hinterrad RR und dem linken Vorderrad RL zugeordnet.

An der zweiten Bremsensteuervorrichtung 70 ist kein separater Behälteranschluss zur Verbindung mit dem Druckmittelvorratsbehälter 4 vorgesehen.

Die zweite Bremsensteuervorrichtung 70 saugt Druckmittel (über die entsprechenden Ausgangsdruckanschlüsse der ersten Bremsensteuervorrichtung 60) durch die erste Bremsensteuervorrichtung 60 hindurch aus dem Druckmittelvorratsbehälter 4.

Bremsensteuervorrichtung 60 ist vorteilhafterweise als eine unabhängige Baueinheit bzw. ein Modul, z.B. als ein Bremsensteuergerät mit einer elektronischen Steuer- und Regeleinheit 12 (ECU) und einer hydraulischen Steuer- und Regeleinheit (HCU), ausgeführt.

Bremsensteuervorrichtung 70 ist vorteilhafterweise als eine unabhängige Baueinheit bzw. ein Modul, z.B. als ein Bremsensteuergerät mit einer elektronischen Steuer- und Regeleinheit 112 (ECU) und einer hydraulischen Steuer- und Regeleinheit (HCU), ausgeführt.

Als Bremssystem für Fahrzeuge mit einer Autopilot-Fahrfunktion wird beispielsgemäß eine Bremsanlage mit einer ersten Bremsensteuervorrichtung 60 vorgeschlagen, welche um ein hydraulisch nachgeschaltetes Backup-Modul 70 (zweite Bremsensteuervorrichtung) ergänzt ist. Dieses als Sekundärbremssystem genutzte Backup-Modul übernimmt die Bremsfunktion, wenn das Primärbremssystem (ersten Bremsensteuervorrichtung 60) ausfällt.

Das Sekundärbremssystem benötigt für einen hydraulischen Druckaufbau in den angeschlossenen Radbremsen ein entsprechendes Druckmittelvolumen. Um den Aufwand eines Sekundärbremssystem-Druckmittelvorratsbehälters oder einer (separaten) Druckmittelversorgungsleitung vom Druckmittelvorratsbehälter 4 des Primärbremssystems zum Sekundärbremssystem zu vermeiden, wird beispielsgemäß vorgeschlagen, dass das Sekundärbremssystem sein benötigtes Druckmittelvolumen durch das Primärbremssystem hindurch aus dem Druckmittelvorratsbehälter 4 des Primärbremssystems ansaugt.

Weil bei einem Ansaugen durch ein an sich bekanntes Primärbremssystem zumindest ein, oftmals zwei oder drei Elektromagnetventile mit geringem Durchtrittsquerschnitt durchströmt werden müssen, besitzt das bekannte Primärbremssystem einen so hohen hydraulischen Ansaugwiderstand, dass mit dem nachgeschalteten Backup-Modul ein Druckaufbau mit zufriedenstellender Dynamik nicht bewerkstelligt werden kann.

Daher wird beispielsgemäß vorgeschlagen, das Primärbremssystem dahingehend zu ändern, dass für jeden Ansaugpfad des Backup-Moduls dem entsprechenden Auslassventil 7 des Primärbremssystems ein entgegen der Auslassrichtung öffnendes Rückschlagventil 407 parallel geschaltet ist.

Beim Ansaugen von Druckmittel durch das Backup-Modul 70 öffnen diese Rückschlagventile und ermöglichen so einen Ansaugvolumenstrom vom Druckmittelvorratsbehälter 4 des Primärbremssystems zu den Pumpen des Backup-Moduls 70, der durch kein zu durchströmendes Elektromagnetventil gedrosselt wird.

Die Rückschlagventile 407 können in an sich bekannter Weise in die Ventileinsätze der Auslassventile 7 integriert sein. Dies hat den Vorteil, dass im Ventilblock des Primärbremssystems keine Bohrungen oder Kanäle für die Rückschlagventile angelegt werden müssen.

Weiter wird beispielsgemäß vorgeschlagen, die in bekannten Primärbremssystemen vorhandene gemeinsame Rücklauf leitung aller Auslassventile zum Druckmittelvorratsbehälter 4 entsprechend dem zweikreisigen Aufbau der Hydraulik in zwei separate Verbindungsleitungen 501, 502 zu den entsprechenden Behälterkammern aufzuteilen. Dies hat den Vorteil, dass beim Betrieb des Backupmoduls 70 eine Leckage eines Bremskreises I, II nicht automatisch zu einem Druckmittelverlust im anderen Bremskreis führt.

In den Ausführungsbeispielen der Fig. 1, 2, 5, 8 betätigt das Sekundärbremssystem (Backup-Modul) die (vorderen) Radbremsen 8, 10 hydraulisch (mittels der Pumpen 280a, 280c) und die (hinteren) Radbremsen 9, 11 elektrisch (z.B. mittels elektrischer Ansteuerung 601, 602 der elektrischen Parkbremsfunktion der Radbremsen 9, 11).

An sich bekannte elektrische Parkbremsen (EPBs) wirken vorzugsweise auf die Räder der Hinterachse, um eine geeignete Bremswirkung zu erzeugen. Hierzu können an sich bekannte, elektromechanisch angetriebene Kombi-Bremssättel genutzt werden, bei denen pro Radbremse eine hydraulische und eine elektromotorische Spannkrafterzeugung in Summe auf ein Paar Bremsbeläge wirkt. Hierbei wird beispielsweise durch einen Elektromotor über ein primäres Getriebe ein Spindelantrieb (z.B. Kugelgewindetrieb) angetrieben, der eine Axialkraft auf den Bremskolben im Bremssattel ausübt. Mit dieser Kraft auf den Bremskolben werden die Bremsbeläge des Bremssattels an die Bremsscheibe gedrückt und erzeugen somit eine Reibbremskraft. Alternativ können separate, nicht mit der hydraulischen Betriebsbremse kombinierte Parkbremsen verwendet werden.

In den Ausführungsbeispielen der Fig. 3, 4, 6, 7 betätigt das Sekundärbremssystem die Radbremsen 8-11 beider Achsen hydraulisch (mittels der zweiten Druckbereitstellungseinrichtung 280) .

Für die Backup-Funktion für Autopilotbremsungen der beispielsgemäßen Bremsanlage der Fig. 1 gilt:
- Vorderachs-Bremsen 8, 10 hydraulisch betätigt, Hinterachs-Bremsen 9, 11 elektrisch,
- Elektronische Blockierverhinderung,
- Passives Rückströmen des in den Niederdruckspeichern zwischengespeicherten Druckmittelvolumens über Rückschlagventile 248 und 250.

Für die Backup-Funktion für Autopilotbremsungen der beispielsgemäßen Bremsanlage der Fig. 2 gilt:
- Vorderachs-Bremsen 8, 10 hydraulisch betätigt, Hinterachs-Bremsen 9, 11 elektrisch,
- Elektronische Blockierverhinderung,
- Aktive Rückförderung mit Pumpe 270a, 270b.

Für die Backup-Funktion für Autopilotbremsungen der beispielsgemäßen Bremsanlage der Fig. 3 gilt:
- Vorderachs-Bremsen 8, 10 und Hinterachs-Bremsen 9, 11 hydraulisch betätigt,
- Elektronische Blockierverhinderung,
- Passives Rückströmen über Rückschlagventile 248 und 250.

Für die Backup-Funktion für Autopilotbremsungen der beispielsgemäßen Bremsanlage der Fig. 4 gilt:
- Vorderachs-Bremsen 8, 10 und Hinterachs-Bremsen 9, 11 hydraulisch betätigt,
- Elektronische Blockierverhinderung,
- Aktive Rückförderung mit Pumpen 270a und 270b.

Für die Backup-Funktion für Autopilotbremsungen der beispielsgemäßen Bremsanlage der Fig. 5 gilt:
- Vorderachs-Bremsen 8, 10 hydraulisch betätigt, Hinterachs-Bremsen 9, 11 elektrisch,
- Elektronische Blockierverhinderung,
- Passives Rückströmen über Rückschlagventile 248 und 250.
- Backup-Modul mit geringem Durchströmwiderstand durch hydraulisch betätigbare Trennventile 218', 220'.

Für die Backup-Funktion für Autopilotbremsungen der beispielsgemäßen Bremsanlage der Fig. 6 gilt:
- Vorderachs-Bremsen 8, 10 und Hinterachs-Bremsen 9, 11 hydraulisch betätigt,
- Elektronische Blockierverhinderung,
- Aktive Rückförderung mit Pumpen 270a und 270b.
- Backup-Modul mit geringem Durchströmwiderstand durch hydraulisch betätigbare Trennventile 218', 220'.

Für die Backup-Funktion für Fahrerbremsungen der beispielsgemäßen Bremsanlage der Fig. 6 gilt:
- Elektrohydraulische Verstärkung,
- Elektronische Blockierverhinderung,
- Aktive Rückförderung mit Pumpen 270a und 270b.

Für die Backup Funktion für Autopilotbremsungen der beispielsgemäßen Bremsanlage der Fig. 7 gilt:
- Vorderachs-Bremsen 8, 10 und Hinterachs-Bremsen 9, 11 hydraulisch betätigt,
- Elektronische Blockierverhinderung.
- Individuelle Druckstellung für vier Radbremsen mit nur zwei Pumpen.

In den Figuren 1, 2, 5, 8 sind die Radbremsen 9 und 11 über/durch die zweite Bremsensteuervorrichtung 70 mit den Ausgangsdruckanschlüssen 309, 311 der ersten Bremsensteuervorrichtung verbunden. In der zweiten Bremsensteuervorrichtung 70 sind jedoch für diese Radbremsen keine hydraulischen Komponenten, insbesondere keine Pumpe oder kein Ventil, vorgesehen. Alternativ zu den dargestellten beispielsgemäßen Bremsanlagen können die Radbremsen 9 und 11 daher auch direkt an die Ausgangsdruckanschlüsse 309, 311 angeschlossen ein, also nicht über / mittels der zweiten Bremsensteuervorrichtung 70.

Zur Erhöhung der Verfügbarkeit sind in den Bremsanlagen der Fig. 1 bis 8 vorteilhafterweise zumindest zwei unabhängige elektrische Energieversorgungen 200, 201 vorgesehen. Z.B. wird die Bremsensteuervorrichtung 60 von einer ersten elektrischen Energieversorgung 200 und die Bremsensteuervorrichtung 70 von einer zweiten elektrischen Energieversorgung 201 versorgt.

Bei den beispielsgemäßen Bremsanlagen ist eine Druckmittelzufuhr zu dem Backup-Modul über eine separat von den hydraulischen Druckleitungen (308, 309, 310, 311) angelegte Saugleitung nicht vorgesehen und auch nicht notwendig. Eine solche Saugleitung würde einen zusätzlichen Aufwand bedeuten und stellt eine potenzielle Fehlerquelle für die Funktion der Bremsanlage dar, weil eine sich möglicherweise darin befindende Luftblase angesaugt werden könnte, was zu einem Ausfall der Bremssystemhydraulik führen würde.

## Patentansprüche

1. Bremsanlage für Kraftfahrzeuge mit
• hydraulisch betätigbaren Radbremsen (8, 9, 10, 11),
• einer ersten elektrohydraulischen Bremsensteuervorrichtung (60), welcher ein, insbesondere unter Atmosphärendruck stehender, Druckmittelvorratsbehälter (4) zugeordnet ist, wobei die erste elektrohydraulische Bremsensteuervorrichtung (60) eine erste elektrisch ansteuerbare Druckbereitstellungseinrichtung (5) zur Versorgung der hydraulisch betätigbaren Radbremsen (8, 9, 10, 11), für jede der hydraulisch betätigbaren Radbremsen ein, insbesondere elektrisch betätigbares, Einlassventil (6a-6d) und ein, insbesondere elektrisch betätigbares, Auslassventil (7a-7d) zum Einstellen radindividueller Bremsdrücke und für jede der hydraulisch betätigbaren Radbremsen einen radindividuellen Ausgangsdruckanschluss (308, 309, 310, 311) umfasst, wobei die Ausgangsdruckanschlüsse (308, 309, 310, 311) über die Auslassventile (7a-7d) mit dem Druckmittelvorratsbehälter (4) verbunden sind, und
• einer zweiten elektrohydraulischen Bremsensteuervorrichtung (70), welche eine zweite elektrisch ansteuerbare Druckbereitstellungseinrichtung (280) umfasst, die zumindest eine erste Pumpe (280a) mit einer Saugseite und einer Druckseite zur Versorgung zumindest einer ersten Radbremse der hydraulisch betätigbaren Radbremsen (8) umfasst,
**dadurch gekennzeichnet, dass** die zweite elektrohydraulische Bremsensteuervorrichtung (70) der ersten elektrohydraulischen Bremsensteuervorrichtung (60) hydraulisch nachgeschaltet ist und dass die Saugseite der ersten Pumpe (280a) mit einem ersten Ausgangsdruckanschluss (308; 309) der Ausgangsdruckanschlüsse der ersten elektrohydraulischen Bremsensteuervorrichtung (60) verbunden ist, wobei dem dem ersten Ausgangsdruckanschluss (308; 309) zugeordneten Auslassventil (7a; 7b) ein in Richtung des ersten Ausgangsdruckanschlusses öffnendes Rückschlagventil (407a; 407b) parallel geschaltet ist.

2. Bremsanlage nach Anspruch 1, **dadurch gekennzeichnet, dass** das parallel geschaltete Rückschlagventil (407a; 407b) in den Ventileinsatz des entsprechenden Auslassventils (7a; 7b) integriert ist.

3. Bremsanlage nach Anspruch 1 oder 2, **dadurch gekennzeichnet, dass** die zweite Druckbereitstellungseinrichtung (280) eine zweite Pumpe (280c) mit einer Saugseite und einer Druckseite zur Versorgung zumindest einer zweiten Radbremse der hydraulisch betätigbaren Radbremsen (10) umfasst, wobei die Saugseite der zweiten Pumpe (280c) mit einem zweiten Ausgangsdruckanschluss (310; 311) der Ausgangsdruckanschlüsse der ersten elektrohydraulischen Bremsensteuervorrichtung (60) verbunden ist, wobei dem dem zweiten Ausgangsdruckanschluss (310; 311) zugeordneten Auslassventil (7c; 7d) ein in Richtung des zweiten Ausgangsdruckanschlusses öffnendes Rückschlagventil (407c; 407d) parallel geschaltet ist.

4. Bremsanlage nach Anspruch 3, **dadurch gekennzeichnet, dass** die erste und die zweite Radbremse (8, 10) einer Vorderachse des Kraftfahrzeugs zugeordnet sind.

5. Bremsanlage nach Anspruch 4, **dadurch gekennzeichnet, dass** die zweite elektrohydraulische Bremsensteuervorrichtung (70) dazu ausgebildet ist, die Bremsdrücke der Radbremsen der Vorderachse (8, 10) auf Basis der Raddrehzahlinformation aller Räder des Kraftfahrzeugs, einer Eingangsdruckinformation der zweiten elektrohydraulischen Bremsensteuervorrichtung (70) und eines elektronischen Bremswunschs zu regeln.

6. Bremsanlage nach Anspruch 5, **dadurch gekennzeichnet, dass** die Räder der Hinterachse zusätzlich zur hydraulischen Radbremse mit jeweils einer elektrisch oder elektromechanisch betätibaren Radbremse, insbesondere mit einer elektrischen Parkbremse oder mit einer Kombibremse, die sowohl hydraulisch als auch elektrisch ansteuerbar ist, ausgeführt sind, wobei die zweite elektrohydraulische Bremsensteuervorrichtung (70) zur elektrischen Betätigung der elektrischen oder elektromechanischen Radbremsen ausgebildet ist (601, 602).

7. Bremsanlage nach einem der Ansprüche 3 bis 6, **dadurch gekennzeichnet, dass** die zweite elektrohydraulische Bremsensteuervorrichtung für die erste und die zweite Pumpe (280a, 280c) jeweils einen Niederdruckspeicher (258, 260) umfasst, wobei die Saugseite der Pumpe über ein in Richtung der Saugseite öffnendes Rückschlagventil (248, 250) mit dem Niederdruckspeicher verbunden ist.

8. Bremsanlage nach Anspruch 7, **dadurch gekennzeichnet, dass** die zweite elektrohydraulische Bremsensteuervorrichtung für die erste und die zweite Pumpe (280a, 280c) jeweils ein stromlos geschlossen ausgeführtes Ablassventil (238, 240, 239, 241) umfasst, wobei die der Pumpe zugeordnete Radbremse über das Ablassventil mit dem Niederdruckspeicher verbunden ist.

9. Bremsanlage nach einem der Ansprüche 3 bis 8, **dadurch gekennzeichnet, dass** die zweite elektrohydraulische Bremsensteuervorrichtung für die erste und die zweite Pumpe (280a, 280c) jeweils ein stromlos geschlossen ausgeführtes Verbindungsventil (278, 279) umfasst, über welches die Saugseite der Pumpe mit dem zugeordneten Ausgangsdruckanschluss (308, 310) der ersten Bremsensteuervorrichtung verbunden ist.

10. Bremsanlage nach einem der Ansprüche 3 bis 8, **dadurch gekennzeichnet, dass** die zweite Druckbereitstellungseinrichtung (280) eine dritte Pumpe (280b) mit einer Saugseite und einer Druckseite zur Versorgung einer dritten Radbremse (9) der hydraulisch betätigbaren Radbremsen und eine vierte Pumpe (280d) mit einer Saugseite und einer Druckseite zur Versorgung einer vierten Radbremse (11) der hydraulisch betätigbaren Radbremsen (10) umfasst, wobei die Saugseite der dritten Pumpe (280c) mit einem dritten Ausgangsdruckanschluss (309) der Ausgangsdruckanschlüsse der ersten elektrohydraulischen Bremsensteuervorrichtung (60) und die Saugseite der vierten Pumpe (280cd) mit einem vierten Ausgangsdruckanschluss (311) der Ausgangsdruckanschlüsse der ersten elektrohydraulischen Bremsensteuervorrichtung verbunden ist, wobei dem dem dritten Ausgangsdruckanschluss zugeordneten Auslassventil (7b) und dem dem vierten Ausgangsdruckanschluss zugeordneten Auslassventil (7d) je ein in Richtung des entsprechenden Ausgangsdruckanschlusses öffnendes Rückschlagventil (407c; 407d) parallel geschaltet ist.

11. Bremsanlage nach einem der Ansprüche 3 bis 6, **dadurch gekennzeichnet, dass** die Druckseite der ersten Pumpe (280a) mit der erster Radbremse (8) und einer dritten Radbremse (9) der hydraulisch betätigbaren Radbremsen verbunden ist und die Druckseite der zweiten Pumpe (280c) mit der zweiten Radbremse (10) und einer vierten Radbremse (11) der hydraulisch betätigbaren Radbremsen verbunden ist.

12. Bremsanlage nach einem der Ansprüche 1 bis 11, **dadurch gekennzeichnet, dass** die Auslassventile (7a-7d) der ersten elektrohydraulischen Bremsensteuervorrichtung (60) über zumindest zwei, insbesondere voneinander unabhängige, Rücklaufleitungen (501, 502) mit Kammern des Druckmittelvorratsbehälters (4) verbunden sind.

13. Bremsanlage nach Anspruch 12, **dadurch gekennzeichnet, dass** eine der Rücklaufleitungen (501; 502) je mit zwei der Auslassventile (7a, 7b; 7c, 7d) verbunden ist, wobei die zu den zwei Auslassventilen gehörenden hydraulisch betätigbaren Radbremsen (8, 9; 10, 11) an denselben Druckraum (17; 18) eines Tandemhauptbremszylinders (2) der ersten elektrohydraulischen Bremsensteuervorrichtung (60) angeschlossen sind.

## Claims

1. Brake system for motor vehicles having
• hydraulically actuable wheel brakes (8, 9, 10, 11),
• a first electrohydraulic brake control device (60) with which a pressurizing-medium reservoir (4) is associated, which pressurizing-medium reservoir is in particular under atmospheric pressure, wherein the first electrohydraulic brake control device (60) comprises a first electrically controllable pressure-providing device (5) for supplying the hydraulically actuable wheel brakes (8, 9, 10, 11), an in particular electrically actuable inlet valve (6a-6d) for each of the hydraulically actuable wheel brakes and an in particular electrically actuable outlet valve (7a-7d) for adjusting wheel-specific braking pressures and a wheel-specific output pressure connection (308, 309, 310, 311) for each of the hydraulically actuable wheel brakes, wherein the output pressure connections (308, 309, 310, 311) are connected to the pressurizing-medium reservoir (4) via the outlet valves (7a-7d), and
• a second electrohydraulic brake control device (70), which comprises a second electrically controllable pressure-providing device (280), which comprises at least a first pump (280a) having a suction side and a delivery side for supplying at least a first wheel brake of the hydraulically actuable wheel brakes (8),
**characterized in that** the second electrohydraulic brake control device (70) is connected downstream of the first electrohydraulic brake control device (60) and **in that** the suction side of the first pump (280a) is connected to a first output pressure connection (308; 309) of the output pressure connections of the first electrohydraulic brake control device (60), wherein a non-return valve (407a; 407b) which opens in the direction of the first output pressure connection is connected in parallel with the outlet valve (7a; 7b) associated with the first output pressure connection (308; 309) .

2. Brake system according to Claim 1, **characterized in that** the parallel-connected non-return valve (407a; 407b) is integrated in the valve core of the corresponding outlet valve (7a; 7b).

3. Brake system according to Claim 1 or 2, **characterized in that** the second pressure-providing device (280) comprises a second pump (280c) having a suction side and a delivery side for supplying at least a second wheel brake of the hydraulically actuable wheel brakes (10), wherein the suction side of the second pump (280c) is connected to a second output pressure connection (310; 311) of the output pressure connections of the first electrohydraulic brake control device (60), wherein a non-return valve (407c; 407d) which opens in the direction of the second output pressure connection is connected in parallel with the outlet valve (7c; 7d) associated with the second output pressure connection (310; 311).

4. Brake system according to Claim 3, **characterized in that** the first and the second wheel brake (8, 10) are associated with a front axle of the motor vehicle.

5. Brake system according to Claim 4, **characterized in that** the second electrohydraulic brake control device (70) is constructed for regulating the brake pressures of the wheel brakes of the front axle (8, 10) on the basis of the wheel-speed information of all wheels of the motor vehicle, the inputpressure information of the second electrohydraulic brake control device (70) and an electronic braking request.

6. Brake system according to Claim 5, **characterized in that**, in addition to the hydraulic wheel brake, the wheels of the rear axle are designed with electrically or electromechanically actuable wheel brakes, in particular with an electric parking brake or with a combined brake, which can be controlled both hydraulically and electrically, wherein the second electrohydraulic brake control device (70) is constructed for electrically actuating the electric or electromechanical wheel brakes (601, 602) .

7. Brake system according to one of Claims 3 to 6, **characterized in that** the second electrohydraulic brake control device comprises a respective low-pressure accumulator (258, 260) for the first and the second pump (280a, 280c), wherein the suction side of the pump is connected to the low-pressure accumulator via a non-return valve (248, 250) which opens in the direction of the suction side.

8. Brake system according to Claim 7, **characterized in that** the second electrohydraulic brake control device comprises a respective discharge valve (238, 240, 239, 241) for the first and the second pump (280a, 280c), which is designed to be normally closed, wherein the wheel brake associated with the pump is connected to the low-pressure accumulator via the discharge valve.

9. Brake system according to one of Claims 3 to 8, **characterized in that** the second electrohydraulic brake control device comprises a respective connecting valve (278, 279) for the first and the second pump (280a, 280c), which is designed to be normally closed and via which the suction side of the pump is connected to the associated output pressure connection (308, 310) of the first brake control device.

10. Brake system according to one of Claims 3 to 8, **characterized in that** the second pressure-providing device (280) comprises a third pump (280b) having a suction side and a delivery side for supplying a third wheel brake (9) of the hydraulically actuable wheel brakes and a fourth pump (280d) having a suction side and a delivery side for supplying a fourth wheel brake (11) of the hydraulically actuable wheel brakes (10), wherein the suction side of the third pump (280c) is connected to a third output pressure connection (309) of the output pressure connections of the first electrohydraulic brake control device (60) and the suction side of the fourth pump (280d) is connected to a fourth output pressure connection (311) of the output pressure connections of the first electrohydraulic brake control device, wherein a respective non-return valve (407c; 409d) which opens in the direction of the corresponding output pressure connection is connected in parallel with the outlet valve (7b) associated with the third output pressure connection and the outlet valve (7d) associated with the fourth output pressure connection.

11. Brake system according to one of Claims 3 to 6, **characterized in that** the delivery side of the first pump is connected to the first wheel brake (8) and a third wheel brake (9) of the hydraulically actuable wheel brakes and the delivery side of the second pump (280c) is connected to the second wheel (10) brake and a fourth wheel brake (11) of the hydraulically actuable wheel brakes.

12. Brake system according to one of Claims 1 to 11, **characterized in that** the outlet valves (7a-7d) of the first electrohydraulic brake control device (60) are connected to chambers (40) of the pressurizing-medium reservoir (4) via at least two in particular mutually independent return lines (501, 502).

13. Brake system according to Claim 12, **characterized in that** one of the return lines (501; 502) is connected to two of the outlet valves (7a, 7b; 7c, 7d) in each case, wherein the hydraulically actuable wheel brakes (8, 9; 10, 11) belonging to the two outlet valves are connected to the same pressure chamber (17; 18) of a tandem master brake cylinder (2) of the first electrohydraulic brake control device (60).

## Revendications

1. Système de freinage, destiné à des véhicules automobiles, comprenant
• des freins de roue à commande hydraulique (8, 9, 10, 11),
• un premier dispositif de commande de frein électrohydraulique (60) qui est associé à un réservoir de fluide sous pression (4), en particulier à la pression atmosphérique, le premier dispositif de commande de frein électrohydraulique (60) comportant un premier moyen d'alimentation en pression à commande électrique (5) destiné à alimenter les freins de roue à commande hydraulique (8, 9, 10, 11), pour chacun des freins de roue à commande hydraulique une soupape d'entrée (6a-6d) en particulier à commande électrique et une soupape de sortie (7a-7d) en particulier à commande électrique pour régler des pressions de freinage propres à chaque roue et, pour chacun des freins de roue à commande hydraulique, un raccord de pression de sortie (308, 309, 310, 311) propre à chaque roue, les raccords de pression de sortie (308, 309, 310, 311) étant reliés au réservoir de fluide sous pression (4) par le biais des soupapes de sortie (7a à 7d), et
• un deuxième dispositif de commande de frein électrohydraulique (70) qui comporte un deuxième moyen d'alimentation en pression (280) comprenant au moins une première pompe (280a) pourvue d'un côté aspiration et d'un côté sous pression pour alimenter au moins un premier frein de roue des freins de roue à commande hydraulique (8),
**caractérisé en ce que** le deuxième dispositif de commande de frein électrohydraulique (70) est monté hydrauliquement en aval du premier dispositif de commande de frein électrohydraulique (60) et **en ce que** le côté aspiration de la première pompe (280a) est relié à un premier raccord de pression de sortie (308 ; 309) des raccords de pression de sortie du premier dispositif de commande de frein électrohydraulique (60), une soupape anti-retour (407a ; 407b), s'ouvrant en direction du premier raccord de pression de sortie, étant montée en parallèle avec la soupape de sortie (7a ; 7b) associée au premier raccord de pression de sortie (308 ; 309).

2. Système de freinage selon la revendication 1, **caractérisé en ce que** la soupape anti-retour (407a ; 407b) montée en parallèle est intégrée dans l'insert de la soupape de sortie (7a ; 7b) correspondante.

3. Système de freinage selon la revendication 1 ou 2, **caractérisé en ce que** le deuxième moyen d'alimentation en pression (280) comprend une deuxième pompe (280c) pourvue d'un côté aspiration et d'un côté sous pression et destinée à alimenter au moins un deuxième frein de roue des freins de roue à commande hydraulique (10), le côté aspiration de la deuxième pompe (280c) étant relié à un deuxième raccord de pression de sortie (310 ; 311) des raccords de pression de sortie du premier dispositif de commande de frein électrohydraulique (60), une soupape anti-retour (407c ; 407d) s'ouvrant en direction du deuxième raccord de pression de sortie étant montée en parallèle avec la soupape de sortie (7c ; 7d) associée au deuxième raccord de pression de sortie (310 ; 311).

4. Système de freinage selon la revendication 3, **caractérisé en ce que** les premier et deuxième freins de roue (8, 10) sont associés à un essieu avant du véhicule automobile.

5. Système de freinage selon la revendication 4, **caractérisé en ce que** le deuxième dispositif de commande de frein électrohydraulique (70) est conçu pour réguler les pressions de freinage des freins de roue de l'essieu avant (8, 10) sur la base des informations de vitesse de rotation de toutes les roues du véhicule automobile, d'une information de pression d'entrée du deuxième dispositif de commande de frein électrohydraulique (70) et d'une demande de freinage électronique.

6. Système de freinage selon la revendication 5, **caractérisé en ce que** les roues de l'essieu arrière comportent chacune, en plus du frein de roue hydraulique, une roue à commande électrique ou électromécanique, en particulier un frein de stationnement électrique ou un frein combiné à commande hydraulique et électrique, le deuxième dispositif de commande de frein électrohydraulique (70) étant conçu pour actionner électriquement les freins de roue électriques ou électromécaniques (601, 602).

7. Système de freinage selon l'une des revendications 3 à 6, **caractérisé en ce que** le deuxième dispositif de commande de frein électrohydraulique comporte pour chacune des première et deuxième pompes (280a, 280c) un accumulateur à basse pression (258, 260), le côté aspiration de la pompe étant relié à l'accumulateur à basse pression par le biais d'une soupape anti-retour s'ouvrant en direction du côté aspiration (248, 250).

8. Système de freinage selon la revendication 7, **caractérisé en ce que** le deuxième dispositif de commande de frein électrohydraulique comprend pour chacune des première et deuxième pompes (280a, 280c) une soupape de vidange de purge (238, 240, 239, 241) conçue pour être fermée en l'absence de courant, le frein de roue associé à la pompe étant relié à l'accumulateur à basse pression par le biais de la soupape de purge.

9. Système de freinage selon l'une des revendications 3 à 8, **caractérisé en ce que** le deuxième dispositif de commande de frein électrohydraulique comprend pour chacune des première et deuxième pompes (280a, 280c) une soupape de liaison (278, 279), conçue pour être fermée en l'absence de courant, qui relie le côté aspiration de la pompe au raccord de pression de sortie associé (308, 310) du premier dispositif de commande de frein.

10. Système de freinage selon l'une des revendications 3 à 8, **caractérisé en ce que** le deuxième moyen d'alimentation en pression (280) comporte une troisième pompe (280b) pourvue d'un côté aspiration et d'un côté sous pression et destinée à alimenter un troisième frein de roue (9) des freins de roue à commande hydraulique et une quatrième pompe (280d) pourvue d'un côté aspiration et d'un côté sous pression et destinée à alimenter un quatrième frein de roue (11) des freins de roue à commande hydraulique (10), le côté aspiration de la troisième pompe (280c) étant relié à un troisième raccord de pression de sortie (309) des raccords de pression de sortie du premier dispositif de commande de frein électrohydraulique (60) et le côté aspiration de la quatrième pompe (280cd) étant relié à un quatrième raccord de pression de sortie (311) des raccords de pression de sortie du premier dispositif de commande de frein électrohydraulique, une soupape anti-retour (407c ; 407d) s'ouvrant en direction du raccord de pression de sortie correspondant étant à chaque fois montée en parallèle de la soupape de sortie (7b) associée au troisième raccord de pression de sortie et de la soupape de sortie (7d) associée au quatrième raccord de pression de sortie.

11. Système de freinage selon l'une des revendications 3 à 6, **caractérisé en ce que** le côté pression de la première pompe (280a) est relié au premier frein de roue (8) et à un troisième frein de roue (9) des freins de roue à commande hydraulique et le côté sous pression de la deuxième pompe (280c) est relié au deuxième frein de roue (10) et à un quatrième frein de roue (11) des freins de roue à commande hydraulique.

12. Système de freinage selon l'une des revendications 1 à 11, **caractérisé en ce que** les soupapes de sortie (7a-7d) du premier dispositif de commande de frein électrohydraulique (60) sont reliées à des chambres du réservoir de fluide sous pression (4) par le biais d'au moins deux conduits de retour (501, 502) en particulier indépendants.

13. Système de freinage selon la revendication 12, **caractérisé en ce que** l'un des conduits de retour (501 ; 502) est relié à deux des soupapes de sortie (7a, 7b ; 7c, 7d), les freins de roue à commande hydraulique (8, 9 ; 10, 11) qui appartiennent aux deux soupapes de sortie étant reliés à la même chambre de pression (17 ; 18) d'un maître-cylindre en tandem (2) du premier dispositif de commande de frein électrohydraulique (60).
